# EUROPEAN PATENT SPECIFICATION

(11) **EP 0 328 684 B1**
(45) Date of publication and mention of the grant of the patent: **18.05.1994**
(21) Application number: 88907362.3
(22) Date of filing: 17.08.1988
(51) Int. Cl.: G06F 15/20, G06F 15/40

(54) **DOCUMENT PROCESSING SYSTEM**
DOKUMENTENVERARBEITUNGSANORDNUNG
SYSTEME DE TRAITEMENT DE DOCUMENTS

(30) Priority: 28.08.1987 JP 216231/87; 15.10.1987 JP 258292/87
(43) Date of publication of application: 23.08.1989
(73) Proprietor: HONDA GIKEN KOGYO KABUSHIKI KAISHA, Minato-ku, Tokyo (JP)
(72) Inventor: MIYOSHI, Akito, Iruma-gun Saitama 350-02 (JP); TERAI, Hiromitsu, Sakado-shi Saitama 350-02 (JP)
(74) Representative: Lehn, Werner, Dipl.-Ing.
(86) International application number: PCT/JP88/00810
(87) International publication number: WO 89/02116

(56) References cited:
- JP-A- 4 965 751
- JP-A-59 214 966
- US-A- 4 734 853
- COMPUTER, vol. 17, no. 11, November 1984, pages 42-56, IEEE Computer Society, Long Beach, US; J. SHEMER et al.: "The genesis of a database computer"
- CONFERENCE PROCEEDINGS THE 10TH ANNUAL INTERNATIONAL SYMPOSIUM ON COMPUTER ARCHITECTURE, Stockholm, 1983, pages 423-425, Computer Society Press; K. MURAKAMI et al.: "A relational data base machine: first step to knowledge base machine"
- PTR-PHILIPS TELECOMMUNICATION & DATA SYSTEMS REVIEW, vol. 45, no. 2, June 1987, pages 45-60, Eindhoven, NL; L.T. VAN DER BIJL et al.: "The application environment of the P9X00"
- 1981 IEEE COMPUTER SOCIETY WORKSHOP ON COMPUTER ARCHITECTURE, CAPAIDM, Virginia, 11th-13th November 1981, pages 301-308, IEEE, New York, US; S.M. GOLDWASSER: "A generalized segment display processor architecture"

## Description

### Technical Field

The present invention relates to an editing apparatus aided by the data processing system. More particularly, the present invention is directed to an editing apparatus capable of editing easily an operating manual for an automobile, an electric appliance and the like, an ordinary book, magazine, newspaper etc. (simply referred to a "book" hereinafter) within a short time.

### Background Art

In recent years, to edit books, the editing apparatuses have been utilized which comprise the host computer including the D/B, and the small-scale computers (editorial purpose computers) connected to the host computer.

In the above-described editing appartus, the small-scale computers perform the data input/output operations, whereas the host computer performs the predetermined data process by employing both the input data and the data registered in the D/B in such a manner that these data are supervised in a page unit and the data to be registered in the D/B among the data representing one page of the book are registered into the D/B (data base).

In the editing apparatus having such an arrangement as described above, the small-scale computers functioning as the editing purpose machine own various functions, however, complex operations are required to operate this editing apparatus, which accordingly requires long operating time. As a result, even when the simple data is input into the editing purpose computer, single small-scale computer may be necessarily occupied for a long time period.

In addition, since the cost of the small-scale computer is very expensive, an extremely high cost is required to install a large number of small-scale computers.

The present invention has therefore been made to solve the above-described problems.

In the Article in COMPUTER, Vol. 17, No. 11, November, 1984, pages 42-46, IEEE Computer Society, Long Beach, U.S.; J. Schemer et al, entitled "The Genesis of a Database Computer", a configuration of a so-called database information system is presented. This system is interposed between a corporate main frame working together with a corporate database and a set of personal computers. The database information system comprises a local relational database. The system performs two basic functions:
a) Extraction of data from or storage of data to the mainframe data base.
b) Management of the local relational database.

No direct access to the host computer via personal computers is provided.

The Article in the IEEE Computer Society Workshop on Computer Architecture, CAPAIDM, 11-13 November, 1981, pages 301-308, 1981, IEEE, New York, U.S., S.M. Goldwasser, "A Generalised Segment Display Processor Architecture", the overall organization for an image processing and display system is presented. This system is based on so-called segment description blocks. The final display presentation is a dynamically created configuration of moveable segments of multiformat data. Also the presentation provided by the SDP system is composed of an arbitrary number of rectangular sub-images or segments which may be easily configured with respect to one another without altering the image data actually stored in memory. The actual composition of the display presentation is controlled by the segment descriptor blocks which contain all necessary control information about size, position, format etc. of the respective image data actually stored in memory. The segment descriptor blocks referring to the contents of one page form a hierarchically structured linked list. Applications also include: document preparation systems, newspaper page composition, publishing + graphics art - interactive layout and page generation systems handling pictures, text and graphics.

According to the present invention, a document editing device is provided comprising a host computer to which a data base is connected, high computer capacity editing means, connected to the host computer and a low computer capacity workstation connected to one of said host computer and said editing means, said editing means comprising high computer capacity input means for inputting first document content data including images and text data for each page in the form of first element data, said first element data including in particular text, an illustration or a photograph, and first setting means for specifying a first unique identifier corresponding to each first element data, characterized by said workstation including low computer capacity input means for inputting second document content data including only text data for each page in the form of second element data, and second setting means for specifying a second unique identifier corresponding to each second element data and said editing means further including means for specifying a layout data for editing which designates a basic layout of a page of said document to be edited and includes material ID number and layout data; means for setting positional coordinates of each of said first and second element data on the basic layout; page data composing means for composing a document content data for one page by combining the first and/or second element data, the identifiers corresponding thereto and the positional coordinates thereof on the basic layout data for editing; and means for separating said first or second element data and the identifiers thereof out of the document content data of the composed one page and storing them in the data base.

### Brief description of the Drawings

Fig. 1 is a functional block diagram for illustrating a basic arrangement of the first preferred embodiment of this invention;
Fig. 2 is a schematic block diagram of the first preferred embodiment of the invention;
Fig. 3 is a flowchart for representing a first editing method according to the first preferred embodiment of the invention;
Fig. 4 illustrates a format of the basic layout code;
Fig. 5 represents a data format of one data element when image data or document data is newly entered;
Fig. 6 illustrates a data format of one spec-information element among machine sort information;
Fig. 7 illustrates a data format of one data element of service data information among machine sort information;
Fig. 8 indicates a data format of one torque information element among machine sort information;
Fig. 9 illustrates a data format of one image information element which is converted during the editing operation;
Fig. 10 represents only element data in one element data of the service data information shown in Fig. 7;
Fig. 11 represents a file for editing a new book;
Fig. 12 illustrates how the converted layout code is produced from the basic layout code;
Fig. 13 is an illustration of one example of a display screen of the basic layout;
Fig. 14 is an illustration of one example of a display screen during the editing operation;
Fig. 15 is an illustration for illustrating how a temporary key of one element data of newly input image information is converted into an element data key;
Fig. 16 is an illustration for illustrating how a temporary key of one element data of newly entered document information is converted into an element data key;
Fig. 17 is an illustration for illustrating a data format of one document information element which is converted during the editing operation;
Fig. 18 is an illustration for showing a data format of one page which is edited by the editing machine;
Fig. 19 is an illustration for representing a data format of one page which is converted by the host computer so as to be registered into the layout D/B 11;
Fig. 20 is a flowchart for representing a second editing method according to the first preferred embodiment of the invention;
Fig. 21 is an illustration for explaining how the data rewriting at the step S104 of Fig. 20 is performed;
Fig. 22 is a schematic diagram for showing a portion of a table for retrieving document data set in the document D/B 12;
Fig. 23 is a schematic diagram for representing a hierarchical structure of a document retrieval table:
Fig. 24 is a flowchart for illustrating a retrival method according to one preferred embodiment of the invention;
Fig. 25 is a graphic representation for showing relationships of a conversion section, an image section and service data on a CRT;
Fig. 26 is a functional block diagram of the first preferred embodiment of the invention;
Fig. 27 is a functional block diagram according to another preferred embodiment of the invention;
Fig. 28 is a functional block diagram according to a further preferred embodiment of the invention;
Fig. 29 is a functional block diagram according to a still further preferred embodiment of the invention;
Fig. 30 is a functional block diagram for illustrating a basic construction of the fourth preferred embodiment of the present invention;
Fig. 31 is a functional block diagram of the fourth preferred embodiment according to the present invention;
Fig. 32 is a functional block diagram of the fifth preferred embodiment according to the present invention;
Fig. 33 is a functional block diagram of the sixth preferred embodiment according to the present invention; and,
Fig. 34 is a functional block diagram of the seventh preferred embodiment according to the present invention.

### Best Mode for Carrying Out the Invention

Referring now to drawings, the present invention will be described in detail.

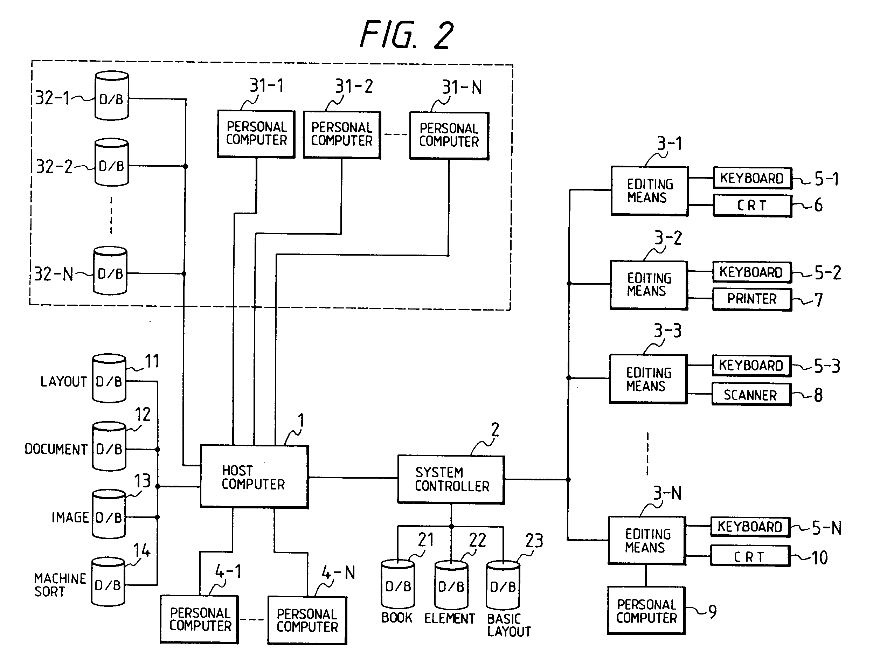

Fig. 2 is a schematic block diagram of the data processing apparatus according to one preferred embodiment of the invention.

In the figure, a plurality of editing apparatus (work stations) 3-1 to 3-N for inputing/outputing document, photographs, illustrations and the like are connected in a on-line mode to a system controller 2 for controlling these editing apparatus. Since these devices are connected in the on-line mode to each other, a quantity of transferred data cannot be so large, but a transfer speed of the data becomes high. These editing apparatus receive various information such as document, photographs and illustrations by way of the vector conversion.

A CRT (cathode-ray tube) 6 is connected to the editing apparatus 3-1, a printer 7 is connected to the editing apparatus 3-2, a scanner 8 is connected to the editing apparatus 3-3, and a personal computer 9 and another CRT 10 are connected to the editing apparatus 3-N. Furthermore, keyboards 5-1 to 5-N are connected to the respective editing apparatus 3-1 to 3-N.

The system controller (a medium-scale relay computer) 2 is furthermore connected to a host computer 1.

A book data base (D/B) 21, an element data base 22 and a layout basic data base 23 are connected to the system controller 2.

The system controller 2 controls these editing apparatus 3-1 to 3-N, and transfers/receives the information in a page unit or an element (document, photograph, the illustration) unit constituting one page to and from the respective editing apparatus.

The host computer 1 is a large-scale general purpose computer such as the IBM's computer, IBM 3090 or equivalent. The system controller 2, personal computers 4-1 to 4-N, layout D/B 11, document D/B 12, image D/B 13 and machine sort information D/B 14 are respectively connected to the host computer 1.

It should be noted that the personal computers 4-1 to 4-N may be exclusively used for the editing apparatus, or for the general purpose other than the editing work, which is similar to personal computers 31-1 to 31-N (will be discussed later).

In case that the editing apparatus 3-1 to 3-N possess a function capable of inputting a language (referred to as "a specific language") other than the language input by the personal computers 4-1 to 4-N, a software for inputting and processing the specific language by the personal computers 4-1 to 4-N is provided with, for instance, the system controller 2. That is to say, the mode to input the specific language is selected by the keyboards (not shown) of the personal computers 4-1 to 4-N. Thereafter, when "A" and ":" keys are depressed, the software stored in the system controller 2 displays the character "Ä". It should be noted that this software may be stored in either the host computer 1 or personal computers 4-1 to 4-N.

In addition, another software is provided with the system controller 2, by which the document input by the personal computers 4-1 to 4-N is vector-converted, as is similar to the document input by the respective editing apparatus 3-1 to 3-N.

The personal computers 31-1 to 31-N which are employed to carry out the work other than the editing work effected by the editing apparatus, are connected to the host computer 1. In other words, the machines or parts surrounded by a dot line shown in Fig. 2 do not constitute the editing apparatus of this invention.

The host computer 1 constitutes the data of one book from the information which have been stored in the data bases 11 to 14, and transfers this data to the system controller 2. The system controller 2 transfers the information of one page which has been edited in the editing appartus to the host computer 1. That is to say, the data transfer between the system controller 2 and the host computer 1 is performed in a so-called "batch" transmission.

When the data code system processed in the host computer 1 is different from the data code system processed in the editing apparatuses 3-1 to 3-N, the code conversion of these data is performed in either the host computer 1 or the system controller 2.

An operation of the data processing apparatus according to a preferred embodiment of the invention will now be described.

Basically, the editing apparatus employing the constructions as illustrated in Fig. 2 can produce, or edit a new book by way of two editing methods as follows.
(A) When a new book is newly produced at all, all of documents or sentences, illustrations, and photographs etc. to be written on each page of the new book must be newly input.
   This will be referred as "a first editing method".
(B) When a new book is produced by utilizing other books which have previously been edited or produced in the editing apparatus, the necessary portions of other books are utilized for the new book and only the minimum portions required to produce the new book are newly input. This will be referred to as "a second editing method".

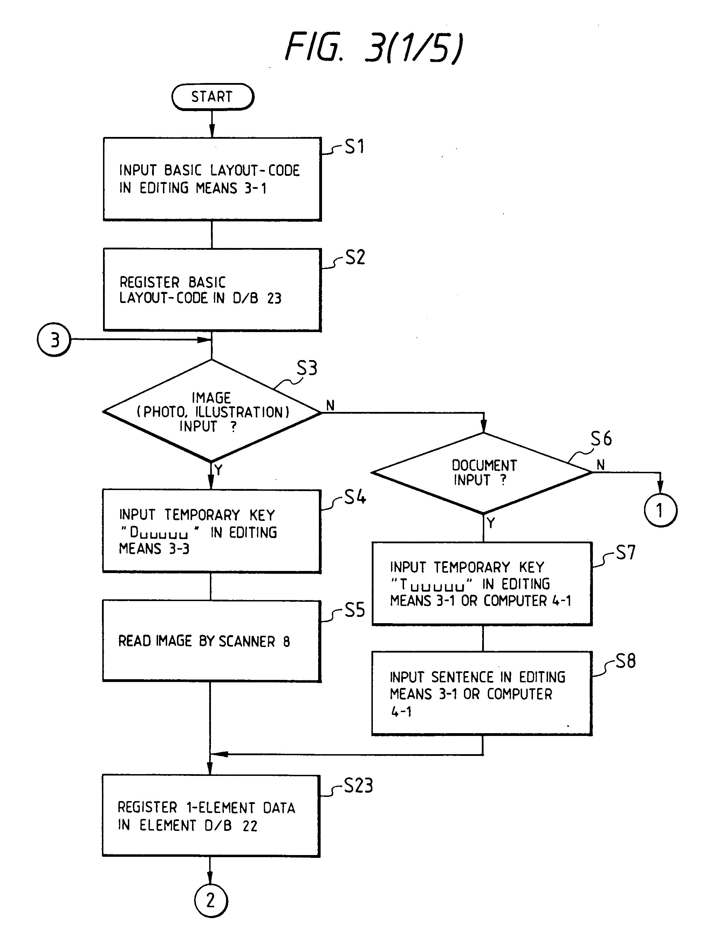

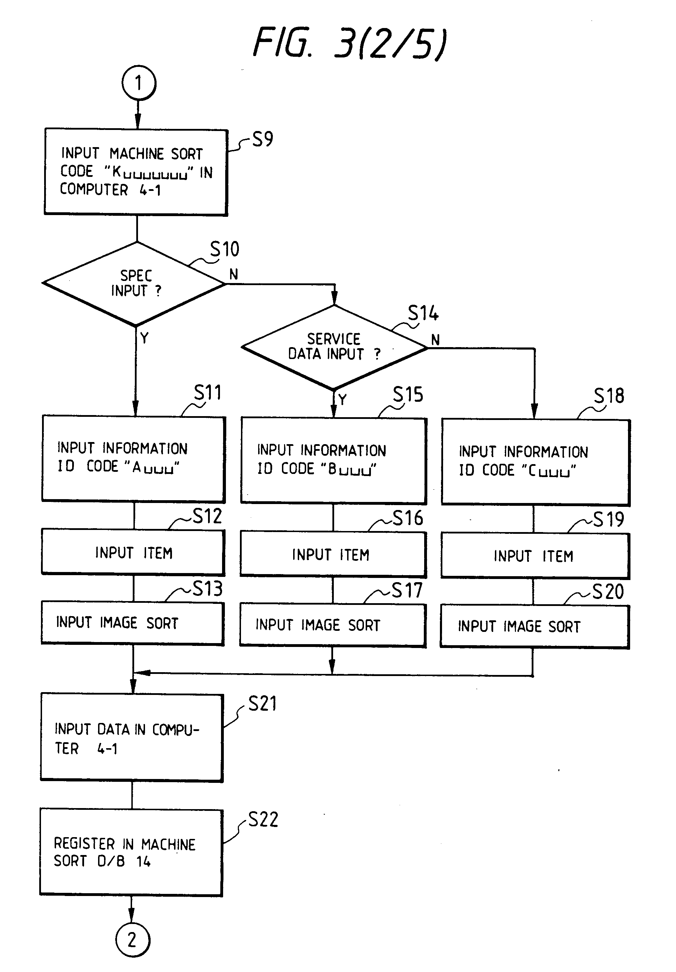

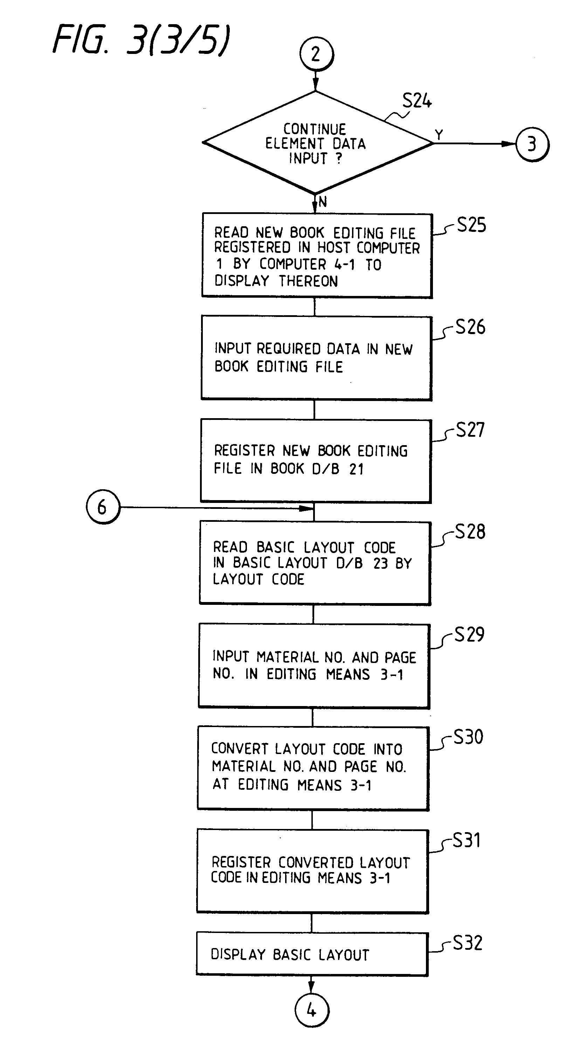

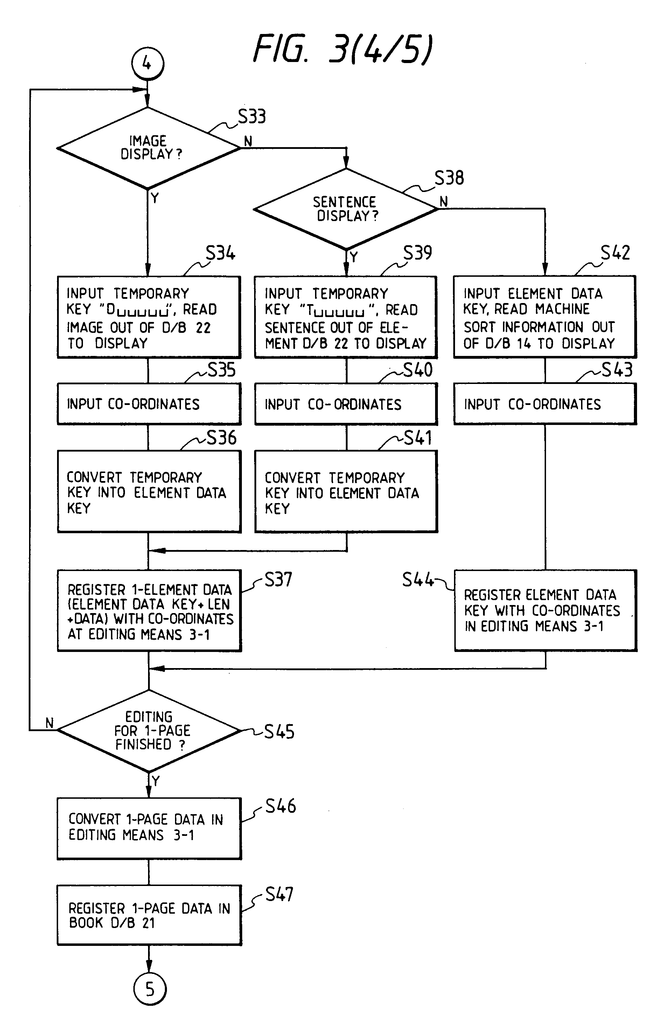

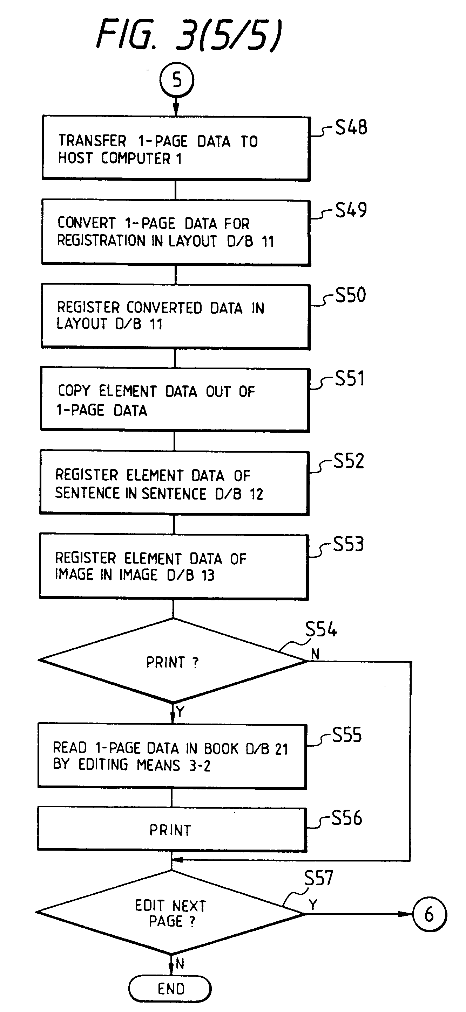

Referring now to Figs. 3 to 19, a description is made that a service manual (simply referred to as "a book" hereinafter) for a bike (auto-bicycle) is produced in accordance with the above-defined first editing method.

Fig. 3 is a flowchart for indicating the first editing method according to the preferred embodiment of the invention.

In Fig. 3, first as a step S1, a basic layout code is input into the editing apparatus to which CRT is connected (for instance, the editing appartus 3-1) by the keyboard 5-1. The basic layout code is to set a size of a book to be newly produced, namely, a size, the number of character, a column number and a column space in one page of the new book.

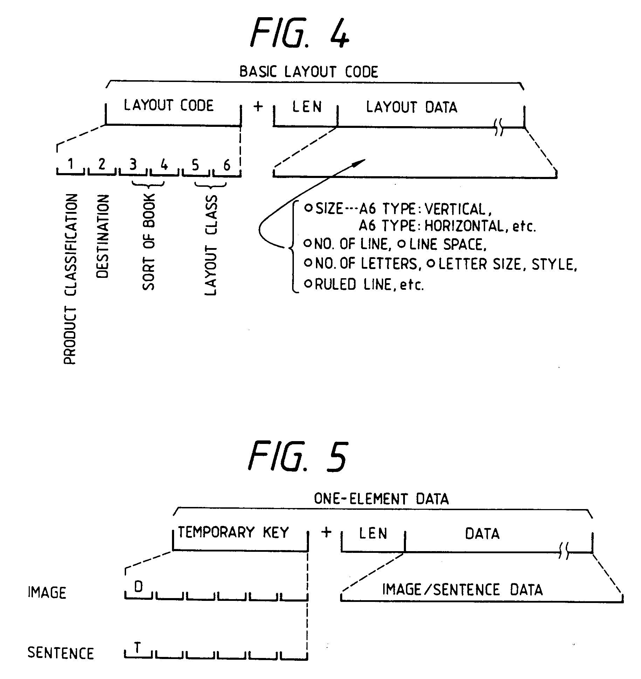

Fig. 4 illustrates one example of the format of the basic layout code.

The basic layout code is constructed of a layout code having, for example, a 6-byte code length, layout data, and another data representing the data length of the layout data.

It should be noted that the data representing a data length of certain data is simply referred to as a "LEN" in the following description.

The layout code is constructed of the data for representing which product classification a book to be produced belongs to; the data for indicating which location (country) the new book is designated; the data representative of the sort of the new book, e.g., service manual, or shop manual; and the data representative of the layout of each page of the new book, e.g., a single frame or a double frame.

The layout data is constructed of the data representing a size of each page of the book, i.e., A6 vertical, A6 horizontal and so on; and the data indicative of a line number, a line space, the number of character, a point, style, presence of a ruled line.

The data concerning a concrete layout of a page on a screen of CRT is set in the layout data, and the layout code is merely an identification code of the layout data. The layout code is converted into a document identification number and a page number which correspond to the indentification data of the new book, as will be described later in connection with the steps S29 and S30.

When entry of the layout data is accomplished, LEN of the layout data is added in front of the layout data.

As previously described in detail, the basic layout code is produced from the layout code, LEN of layout data, and layout data.

Referring back to Fig. 3, when the basic layout code is generated, as illustrated in a step S2, the editing apparatus 3-1 transfers the basic layout code to the system controller 2 which registers the basic layout code in the layout basic D/B 23.

Upon completion of registering the basic layout code, in the next steps S3 to S24, entry of such information of illustrations, photographs, document and the like which are to be arranged in each page of the book is carried out. It should be noted that both illustrations and photographs are referred to as an image in the following description.

In the step S3, a judgement is made whether or not the information to be input corresponds to the image. When the image is entered, as indicated in the step S4, a temporary key having, for instance, a 6-byte length is entered in the editing apparatus 3-3 by the keyboard 5-3. The temporary key corresponds to an identification code of image data to be entered which is determined by an operator by himself. "D" indicating that this temporary key relates to the image data is entered into the head byte of the temporary key.

In the next step S5, the image is read out by the scanner 8.

In a step S23, the temporary key, LEN of the readout image data, and the image data are registered into the element D/B 22 as one element data.

If a judgement is made in the previous step S3 that no image is entered, another judgement is made in a step S6 whether or not document or sentence is entered. When the document (sentence) is entered, as indicated in a step S7, the temporary key is input in the editing apparatus 3-1 by the keyboard 5-1 or in any of the personal computer 4-1 to 4-N. As previously explained in the step S4, the temporary key is constructed of, for instance, a 6-byte length, and corresponds to an identificatin code of the document to be input which is determined by the operator himself. In this case, "T" indicating that the temporary key relates to the document key is input into the head byte of the temporary key.

In the subsequent step S8, the document or sentence is entered in the keyboard 5-1 or any one of personal computers 4-1 to 4-N.

Then, in the step S23, the temporary key entered in the previous step S7, LEN of the document entered in the step S8, and this document are registered as one element data in the element D/B 22.

In Fig. 5, there is shown one element data registered in the step S23.

When the data relating to the document which is entered in the steps 7 and 8 is input into the personal computer 4-1, the entered data is edited as the one element data (see Fig. 5) in the system controller 2, host computer 1, or personal computer 4-1.

In the step S6, if a judgement is made that no document is entered, it is decided that said input is related to the machine sort information.

The machine sort information includes the data on the repairing data, tools to be used and the like for a bike. In accordance with the preferred embodiment of this embodiment, the machine sort information includes the specification, service data and torque, which will be described in detail hereinafter.
(A) Specification is, for instance, the reparing data on the bike, and the data representative of the reparing items and details which are entered into a list indicating the data of the tool to be used, and is constructed of alphanumerical data and KANJI characters. In other words, this specification represents a type of an engine oil, a name of a tool to be used, and repairing items such as an inner diameter of cylinder, and an outer diameter of a piston diameter, and the like.
(B) Service data is numerical data representative of, for instance, maintenance data which is entered into a list of the maintenance data, and constructed of three different data, i.e., a maximum value, a minimum value, and a limit value of usage (or a center value).
   That is, as the maintenance data relating to the inner diameter of the cylinder, there are the typical maximum value and minimum value, and the usable maximum value. Also, as the maintenance data concerning the outer diameter of the piston, there are the typical maximum value and minimum value, and the usable minimum value. As to the data of a capacity of an engine oil tank, a capacity of a coolant and the like which has no discrimination in the maximum and minimum values, the same values as these maximum and minimum values are input, by which these data are registered.
(C) Torque is numerical data indicative of fasten torque of fastening screws for the bike (maximum value, minimum value, and center value), a diameter of a screw, the number of the required screws. That is to say, the torque information is constructed of five pieces of numeral data containing the maximum value, minimum value, center value (or the limit value for usage) and other two informations.

When the judgement is made that the input data corresponds to the machine sort information, the machine sort code is entered which represents that the machine sort information to be input is related to which sort of the bike, as indicated in the step S9, by utilizing any one of the personal computers 4-1 to 4-N (e.g., personal computer 4-1) connected to the host computer 1. This machine sort code is constructed of, for instance, 8 bytes, and "K" for representing that the machine sort code is related to the machine sort information is input into the head byte of the machine sort code.

In a step S10, a judgement is made whether or not the machine sort information to be input is the specification.

If a judgement is affirmative in the step S10, then, an information identification code having, for instant, a 4-byte length is input in a step S11. At this time, "A" for indicating that the information identification code is related to the specification is input at the head byte of the identification code.

In a next step S12, an item having, for example, a 3-byte length is entered.

In a subsequent step S13, an image classification or sort having, for instance, a 2-byte length is input. Data representing a language sort of the specification information (for example, the language is Japanese, or English) is entered into this image classification.

In a step S21, specification information is entered by the personal computer 4-1.

In a subsequent step S22, the machine sort code, information identification code, item and image classification which have been input by the previous steps S9, S11, S12, and S13, the data status (which is automatically set in the host computer 1) for indicating the history of the specification information entered in the step S21, and the specification information are registered as one element data in the machine sort D/B 14 by means of the host computer 1.

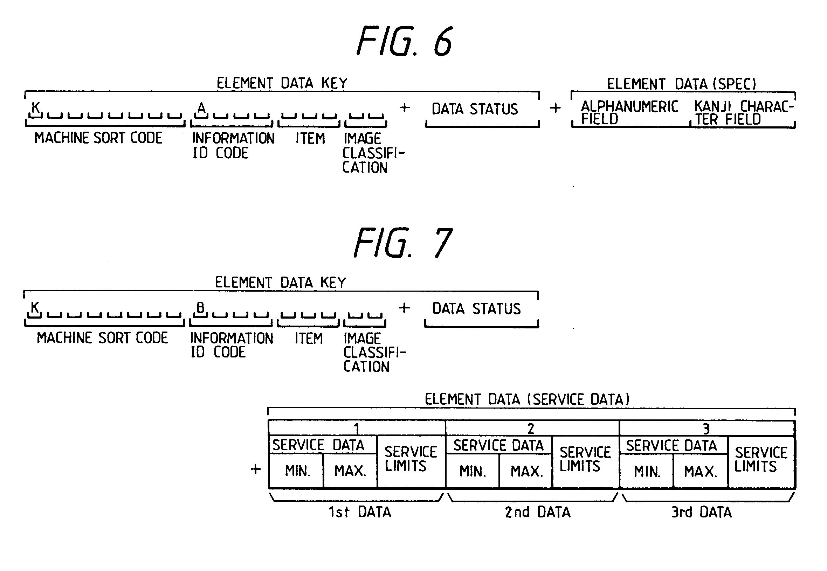

A data format of the one element data is illustrated in Fig. 6. As is shown in Fig. 6, the data consisting of the machine sort code, information identification code, item, image classification, and data status will be referred to as an element data key in the following description.

If no specification is input in the previous step S10, another judgement is made whether or not the service data is entered in a step S14.

If the service data is entered, the information identification code is input in a step S15, which is similarly done in the preceding step S11. In this case, "B" is input into the head byte of this code.

In the next step S16, the item is input, which is similarly executed in the previous step S12.

In the subsequent step S17, the image section is entered. The function of the image classification information entered at entry of the service data will be discussed later with reference to a step S42.

In the step 21, the service data information is input by means of the personal computer 4-1.

The service data information is constructed of three different data, i.e., the maximum value, minimum value and a limit value of usage (or a central value). When these three data are input in a specific unit in the editing apparatus according to the preferred embodiment, these data are stored and also converted into other units to be stored thereafter.

Fig. 7 illustrates a format of 1-element data (element data key and service data) which is registered in the machine sort information D/B 14 in the step S22.

As illustrated in Fig. 7, the service data is so constructed as to be set in a first data section through a third data section. In the step S21, when the three data are input in the preselected specific unit (for example "mm"), these data are set in the first data section. Although it is not shown in Figs. 3 and 7, just before entry of the service data information, a conversion classification (for example, 2-byte length data) for indicating what other unit three data set in the first data section should be converted into, with the result that the three data entered in the millimeter unit into the first data section are converted into other units (e.g., an inch unit) than millimeter unit, which are designated by the conversion classification, and thereafter stored in the second data section.

Then the three data in millimeter unit stored in the first data section are converted into still other unit designated by the conversion classification and the resultant converted data are transferred to the third data section.

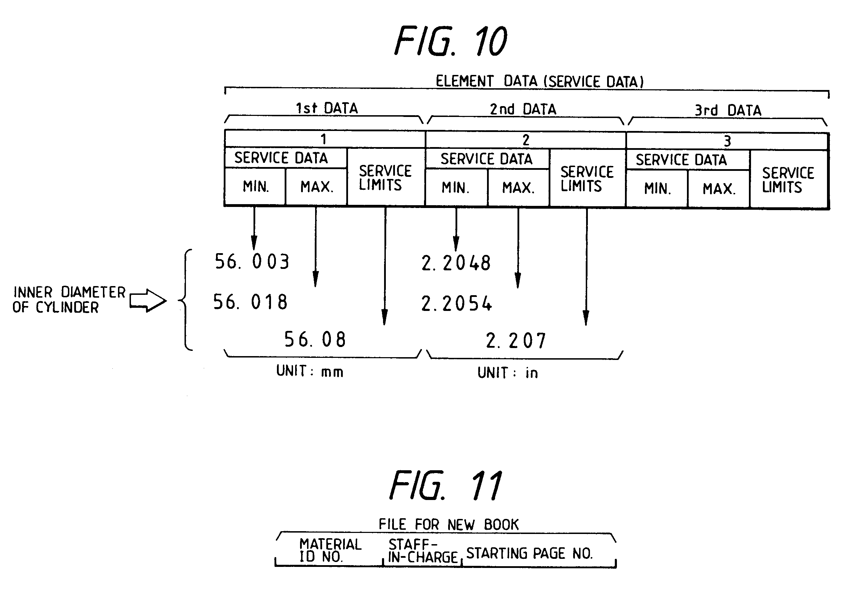

Referring to Fig. 10, the above-mentioned conditions will now be described more in detail. Fig. 10 illustrates only the service data (element data) among the data shown in Fig. 7.

When the information on the inner diameter of the cylinder of the bike is entered as the service data, the minimum value of 56.003, the maximum value of 56.018, and the limit value of usage of 56.08 (illustrated in Fig. 10 as the service limit) are input in the millimeter unit. These numerical data are set in the first data section.

If the conversion classification set before entry of the service data is designated to convert the millimeter unit into the inch unit, each of the data set in the first data section is converted into 2.2048; 2.2054; and 2.207 inches, respectively and the converted data are set in the second data section.

Also in the third data section, each of the data set in the first data section is converted into still other unit in accordance with the designation of the conversion classification.

In other words, the function of the conversion classification is to automatically convert the service data into a certain unit other than the originally input unit when the service data is entered in the certain specific unit, and thereafter to set these converted data into the second and third data sections.

It should be noted that in the steps S9 to S21, the respective data input by the personal computer 4-1 are edited as the machine sort information data as illustrated in Figs. 6 to 8 in the system controller 2, host computer 1, or personal computer 4-1.

Next, in the step S22 as shown in Fig. 7, the machine sort code, information identification code, item and image classification which have been entered in the previous steps S9, S15, S16 and S17, the data status (which is automatically fixed in the host computer 1) for representing a history of the service data information entered in the step S21, and the service data information consisting of the first to third data sections are registered as the 1-element data in the machine sort information D/B 14 under the control of the host computer 1.

Then, if no service data is entered the judgement of the step S14 is negative and shows that the torque information is entered.

When the entry of the torque information is judged, the information identification code is entered in the step S18, which is similarly executed in the preceding steps S11 and S15. At this time, "C" is input in the head byte of the information identification code.

In the subsequent step S19, the item is input, which is similarly performed in the steps S12 and S16.

In the step S20, the image classification is entered. The function of the image classification which is entered during entry of the torque information is similar to a function of an image classification which will be described later relating to a step S42.

In the next step S21, the torque information is input into the personal computer 4-1.

The torque information is constructed of five pieces of data containing the maximum value, minimum value, and center value (or a limit value of usage), and also two pieces of data representative of other information. In the editing apparatus, when these five pieces of data are input in the specific unit similar to the above-mentioned entry method of the service data, these data are stored, and at least three pieces of data other than two pieces of data to represent the other information are firstly converted into other units and secondly stored.

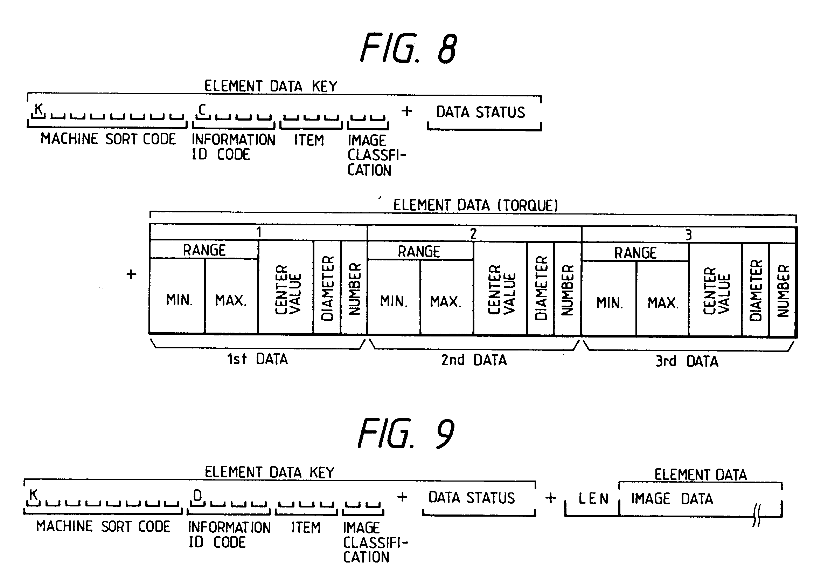

Fig. 8 illustrates a format of 1-element data (element data key and torque) which is registered in the machine sort information D/B 14 in the step S22.

As illustrated in Fig. 8, the torque data is so arranged as to be set in the first to third data sections. In the step S21, when the torque data is entered in some particular unit (for example, "kg"), this torque data is set in the first data section. Although not shown in Figs. 3 and 8, the conversion classification is input, just before entry of the torque information, so as to instruct that five pieces of data set in the first data section should be converted into a certain different unit. As a result, at least three pieces of data input in the "kg" unit into the first data section (i.e., three pieces of data other than two pieces of data representative of the other information among five pieces of data to indicate the torque information) are converted into a different unit (e.g., "lb" unit) designated by the conversion classification except the "kg" unit. Then, the converted data is set in the second data section.

In addition, at least three pieces of data entered into the first data section in the "kg" unit are converted into still other unit which are designated by the conversion classification, and thereafter the converted data are set in the third data section.

In other words, the conversion classification is to automatically convert the torque data into the unit other than the above-described unit when the torque data is input in the certain specific unit, and also to set these converted data into the second and third data sections, in a manner similar to the case of the service data.

Since the data concerning the diameter and the number are not required to be converted by the unit, no unit conversion is needed for these two pieces of data. It may be possible, of course, to perform the similar unit conversion on these two data as same as in other three data. In this case, however, it is necessary to prohibit from using the converted two data.

In the 1-element data as illustrated in Figs. 6 to 8, a byte length of the respective element data key is identical to each other.

In the step S22, as shown in Fig. 8, the machine sort code, information code, item and image classification which have been input in the steps S9, S18, S19 and S20, the data status (which is automatically set in the host computer 1) representative of the history of the torque data which has been input in the step S21, and the torque data information consisting of the first to third data sections are registered as 1-element data by the host computer 1 into the machine sort information D/B 14.

In the steps S22 or S23, when entry of one-image, one-document, or one piece of the machine sort information (these are referred to as "element data" hereinafter) is accomplished, a judgement is made whether or not the entry of the element data is continued in the next step S24. If the entry of the element data is continued, the control process is returned to the previous step S3. If the entry of the element data is not continued, the editing work of the book is commenced from a step S25. The editing work is performed by one page unit.

In the step S25, a new book producing file is read out from the host computer 1 by any one of the personal computers 4-1 to 4-N connected to the host computer 1.

Fig. 11 illustrates an arrangement of the new book producing file. As shown in Fig. 11, the new book producing file is constructed of material supervision or ID No. information, staff-in-charge information, and starting page information.

The material supervision No. is a title of a book to be newly produced or the supervising number. The staff-in-charge information is the data representative of a staff who is qualified to produce the new book. The starting page information indicates what page the book to be produced is commenced from. In other words, the page information indicates the first page of the new book for the starting page. For instance, the second page corresponds to the starting page of a book distributed in Japan, whereas the eleventh page corresponds to the starting page of a book distributed in U.S.A.

The staff-in-charge information is able to be applied to the security supervision of a newly edited book, for example. That is to say, the information relating to a staff who is permitted to produce a new book is previously registered in the host computer 1, and the new book is edited by the staff only when he has been registered in the new book producing file in the host computer 1. Under this security supervision, it can prevent that the book which is not allowed to be edited is mistakenly edited or the previously edited book is unnecessarily and mistakenly revised by the editing apparatus.

In this case, the staff-in-charge information may be preferably encrypted or stored in a magnetic card.

When the new book producing file is read out, predetermined data is input into this file at a step S26. When the predetermined data is entered, as shown in a step S27, the new book producing file is transferred from the host computer 1 to the system controller 2 and then registered in the book D/B 21.

In the next step S28, the layout code (see Fig. 4) is entered by the keyboard 5-1, so that the basic layout code previously registered in the layout basic D/B 23 is called up to CRT 6.

When the basic layout code is called up in the editing apparatus, both the document supervision No. and the page number to be edited are input. The document supervision number is a title or the supervision or ID number of the new book, which is similar to the document supervision No. of the new book producing file shown in Fig. 11.

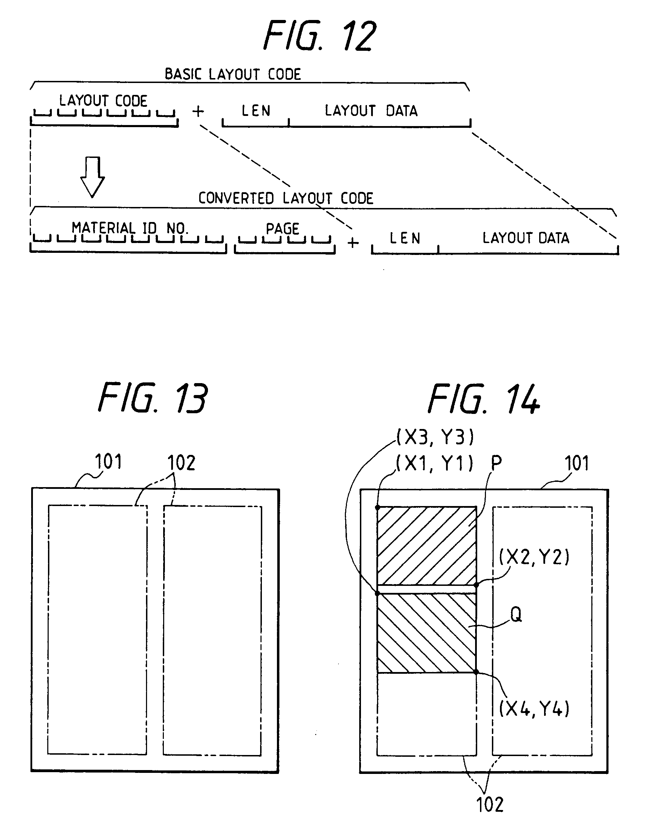

After the document supervision No. and the page number to be edited are input in a step S29, the editing apparatus 3-1 converts the layout code among the basic layout code read in the step S28 into the document supervision No. and the page number which have been input in the step S29, as illustrated in a step S30 and Fig. 12.

Upon completion of the code conversion, the editing apparatus 3-1 stores the document supervision No., the number of page, LEN and layout data in the editing apparatus 3-1 in a step S31. These document supervision No., the number of page, LEN and layout data will be referred as "a converted layout code" in the following description.

In a step S32, the basic layout is displayed on CRT 6 by employing the converted layout code. As illustrated in Fig. 13, the basic layout is basically constructed of a contour 101 of a page to be edited and a document entry region 102. The basic layout shown in Fig. 13 is a double frame.

In a subsequent step S33, a judgement is made whether or not the image is displayed on CRT 6.

To display the image, the temporary key (see Fig. 5) is entered by the keyboard 5-1 in a step S34 so as to call up one element data, i.e., temporary key, LEN of the image data to be called up, and the image data from the element D/B 22, and display the image data called up on CRT 6.

In a step S35, by a mouse (not shown) connected to the keyboard 5-1, the image displayed on CRT 6 is moved to a desirable position on the basic layout.

Fig. 14 illustrates an image of the screen of CRT 6 at that moment, which is similar to the illustration of Fig. 13. As shown in Fig. 14, when the image is moved to the region denoted by "P", the upper left coordinates and lower right coordinates of the image are (X1, Y1) and (X2, Y2), respectively.

When the image is transferred in this way, the upper left coordinates (X1, Y1) and lower right coordinates (X2, Y2) on the basic layout are entered into the editing apparatus 3-1.

It should be noted that while the image is moved, the size of the image may be enlarged or reduced in accordance with the capability of editing apparatus. Only the image can be moved over the document input region 102.

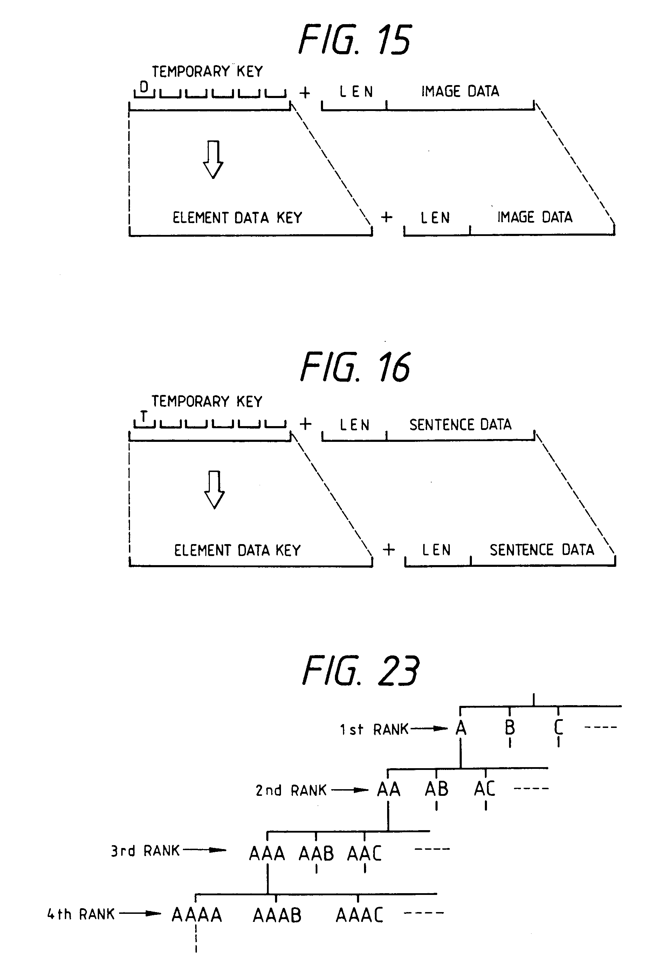

In a step S36, as illustrated in Fig. 15, the temporary key among the 1-element data consisting of the temporary key, LEN of image data to be called up, and image data is converted into the element data key. As illustrated in Fig. 9, the element data key is constructed of the machine sort code, information identification code, item, image classification, and also data status (which is automatically input in the host computer 1) representative of a history of image data, which is similar to the machine sort information including the specification information, service data information, and torque information.

The conversion operation of the temporary key into the element data kay in the step S36, is practically performed when an editor has entered the element data key excepting for the data status. "D" is input in the head byte of the information identification code. A byte length of the element data key shown in Fig. 9 is identical to the respective byte lengths shown in Figs. 6 to 8.

In a step S37, both the 1-element data consisting of the element data key, LEN of the image data corresponding to the element data key and the image data, and the coordinates (X1, Y1), (X2, Y2) are registered in the editing apparatus 3-1.

In a step S45, another judgement is made whether or not the edition of one page is accomplished. If not yet the accomplished, then the control process is returned to the step S33.

if it is judged in the step S33, that the image is not displayed on CRT 6, another judgement is made whether or not the document or sentence is displayed in a step S38.

When the document or sentence is displayed, in a step S39, the temporary key (see Fig. 5) is entered by the keyboard 5-1, and the one element data consisting of the temporary key, LEN of the document data to be called up, and the document data themselves is called up from the element D/B 22, and the document data are displayed on CRT 6.

By employing the mouse (not shown) connected to the keyboard 5-1, the document displayed on CRT 6 is moved to the desired position on the basic layout in a step S40.

When the document is moved to the position indicated by the symbol "Q" on the basic layout shown in Fig. 14, the upper left coordinates and the lower right corodinates of the document are (X3, Y3) and (X4, Y4), respectively.

After the document has been moved, both the upper left coordinates (X3, Y3) and the lower right coordinates (X4, Y4) of the document on the basic layout are input into the editing apparatus 3-1 (S40).

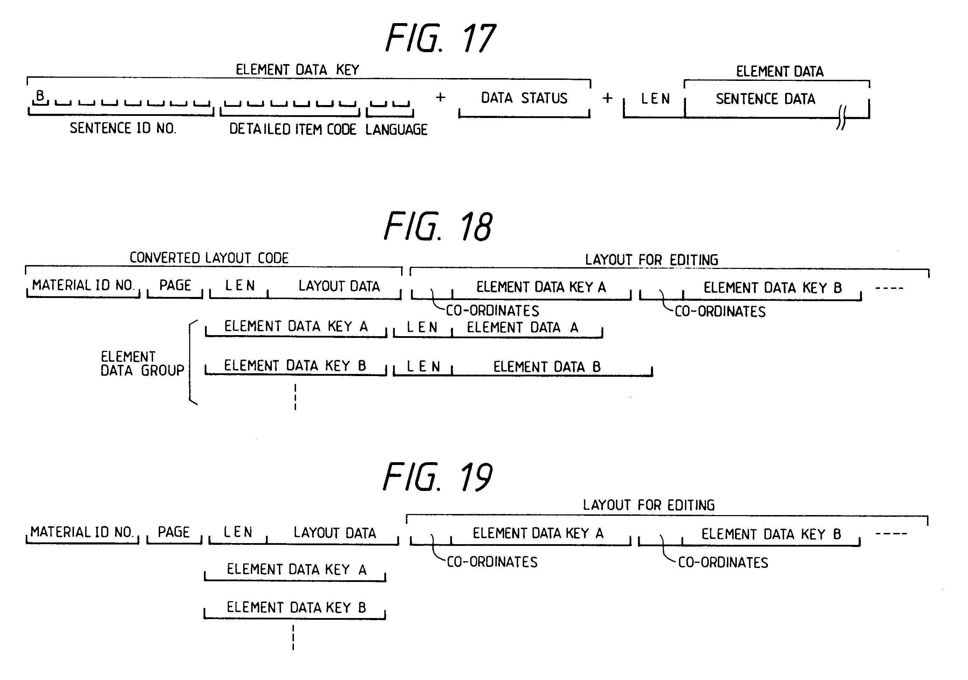

In a step S41, as illustrated in Fig. 16, the temporary key in the 1-element data consisting of the temporary key, LEN of the called up document, and document data is converted into the element key data. Formats of these element data key, LEN of the called up document data and document data are illustrated in Fig. 17.

As shown in Fig. 17, the element data key corresponding to the document data is constructed of the sentence supervision No. having a length of, for instance, 8 bytes; the detailed item code having a length of, for example, 6 bytes; the language information having a length of, for example, 2 bytes; and the data status (which is automatically added by the host computer 1) indicative of a history of the sentence or document data.

The sentence supervision No. is the data to specify each document, and in the head byte of which "B" is input. The language information indicates what language the document data has been produced in, for example, Japanese or English. The detailed item code is a classification code of the document or sentence.

It should be noted that after the data status of the 1-element data shown in Fig. 17, appropriate number of blanks are added to make the byte length of the element data key equal to that of the respective element data keys as shown in Figs. 6 to 9. In other words, each byte length of the element data keys corresponding to the document data, image data and machine sort information data is set to be identical with each other.

With employing the detailed item code, the editing apparatus can retrieve the document or sentence. This document retrieval operation will be discussed later in a step S114.

In a step S37, the element data key, LEN of the document data corresponding to the element data key, and document data are registered as the 1-element data together with the coordinates (X3, Y3), (X4, Y4) into the editing apparatus 3-1.

In a step S38, if a judgement is made that no document is displayed on CRT 6, it can be recognized that the machine sort information is to be displayed.

In a step S42, the element data key of the machine sort information to be called up is input by the keyboard 5-1, whereby the machine sort information having 1-element data, i.e., element data key, specification information, service data information or torque information is called up from the machine sort information D/B 14 to the editing apparatus 3-1, and then the specification information, service data information or torque information is displayed on CRT 6.

In the preferred embodiment, the element data key is entered by the keyboard 5-1, and the machine sort information is directly called up via the host computer 1 and system controller 2 from the machine sort information D/B 14 to the editing apparatus 3-1. However, alternatively, employing any one of the personal computers 4-1 to 4-N, the machine sort information may be called up from the machine sort information D/B 14 to be temporarily registered into the element D/B 22. Thereafter, the element data key may be input by the keyboard 5-1, and the machine sort information may be called up via the system controller 2 from the element D/B 22 to the editing apparatus 3-1.

It should be noted that display conditions or modes of the service data information and torque information among the machine sort information data are determined in accordance with the image classification information in the element data key and the conversion classification (not shown) described with reference to the step S21.

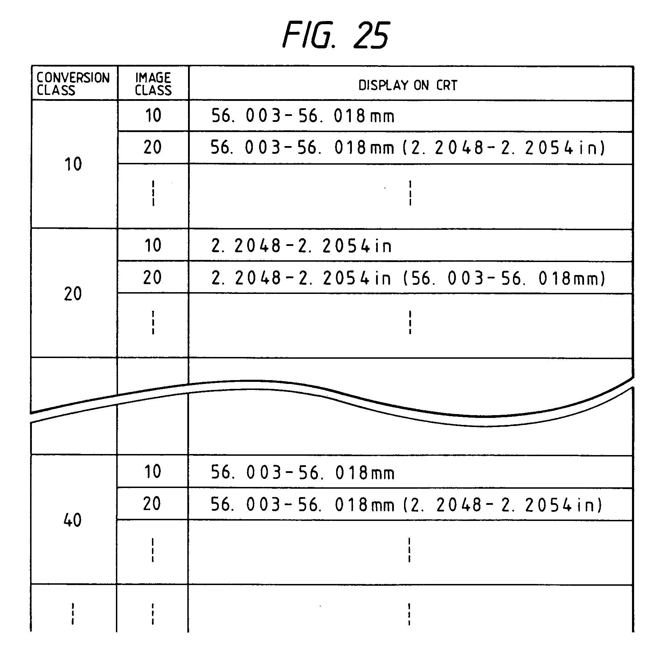

As to the service data, for instance, as illustrated in Fig. 10, when the data set in the first data section is automatically converted to be set within the second and third data sections in accordance with the conversion classification information previously set, the service data is displayed on CRT 6 in the illustration format of Fig. 25 in accordance with the conversion classification and image classification information.

Fig. 25 is a table for representing one example of a relationship between the conversion classification, image classification and service data, which is displayed on the CRT.

In Fig. 25, if the conversion classification is "10" and the image classification is "10", only the data set in the first data section (see Fig. 10) is displayed on CRT 6 in the millimeter unit.

If the conversion classification is "10" and image classification is "20", the data set in the first data section is displayed in the millimeter unit, and subsequently, the data set in the second data unit is displayed within a parenthesis in the inch unit.

If the conversion classification is "20" and image classification is "10", only the data set in the second data is displayed in the inch unit.

When the conversion classification is "20" and image classification is "20", the data set in the second data is displayed in the inch unit, and subsequently, the data set in the first data unit is displayed within a parenthesis in the millimeter unit.

When the conversion classification is "40", the same data and unit display as in the conversion classification being "10" is performed, and its decimal point is not a period, but a comma.

As is similar to the steps S35 and S40, the data on the machine information is positioned on the basic layout and the coordinates thereof is input in a step S43.

In a subsequent step S44, the element data key and its coordinates information selected from the 1-element data, as illustrated in Figs. 6 to 8, are registered into the editing apparatus 3-1.

Not only the element data key, but also the respective element data together with the coordinates information thereof may be of course registered.

When a judgement is made that the editing work for one page is accomplished in the step S45, the format of one page data is converted into another format shown in Fig. 18 in a step S46. This conversion is executed in the editing apparatus for performing the editing work (the editing apparatus 3-1 in this case).

Fig. 18 illustrates a format of the data having one page information converted in the editing apparatus. In Fig. 18, the one page data converted in the editing apparatus is constructed of the following data:
(A) The converted layout data which has been converted in the step S30 (see Fig. 12)
(B) The coordinates entered in the previous steps S35, S40 or S43, and the element data key of the 1-element data arranged in the region designated by said coordinates. When a plurality of element data (image data, document data, or machine sort information data) are arranged within one page, plural sets of the coordinates and element data key should be storaged for one page.
   The coordinates and element data key are set subsequent to the converted layout data. A set of coordinates and element data key will be referred to as "a layout for the editing work" in the following description.
(C) The element data key of the element data arranged within one page, LEN of the element data, and the element data. When a plurality of element data are inserted in one page, plural sets of the element data key, LEN, and element data should be arranged for one page.

In other words, the number of the 1-element data constituted of the element data key, LEN and element data is same as that of a pair of the coordinates and element data key contained in the layout for the editing work.

Subsequent to the layout for the editing work, the element data key, LEN and element data are set.

When the element data is the machine sort information, as apparent from Figs. 6 to 8, since no LEN is present in front of the element data, of course, only the element data key and element data are set.

These data arranged behind the layout for the editing work will be referred to an element data group in the following description (see Fig. 18).

Although not shown in Fig. 18, an end code for indicating that one page data is completed is added at the end of the final element data.

When one page data is converted as illustrated in Fig. 18, the resultant converted one page data is registered via the system controller 2 in the book D/B 21 in the step S47.

In the next step S48, one page data which has been converted in the previous step S46 is transferred to the host computer 1.

It should be noted that if the host computer 1 is not in operation due to holiday or the like, the data processes until the step S47 may be repeatedly performed, and several pages data which have been registered in the book D/B 21 may be transferred after the operation of this host computer 1 is commenced.

In a step S49, the above-described one page data is duplicated and the format thereof is converted into that illustrated in Fig. 19 in the host computer 1. Fig. 19 illustrates one page layout information which is converted in the host computer 1 so as to be registered in the layout D/B 11.

The one page data transferred to the host computer 1 is distributed and stored in the respective D/B (i.e., layout D/B 11, document D/B 12, image D/B 13 and machine sort information D/B 14) connected to the host computer 1. The data conversion executed in the step S49 is performed so as to store in the layout D/B 11, only the information relating to the layout among the one page data.

As is obvious from the comparison between Figs. 18 and 19, in the step S49, both LEN and the element data have been removed from the element data group of the 1-page data which is set subsequent to the layout for the editing work.

In a next step S50, the data converted in the previous step S49 is registered in the D/B 11.

In a step S51, the element data group is copied by employing the 1-page data which has been transferred to the host computer 1 in the previous step S48.

In a step S52, the data relating to the document data among the element data group is registered in the document D/B 12.

In a step S53, the data relating to the image data among the element data group is registered in the image D/B 13.

In a subsequent step S54, a judgement is made whether or not the edited 1-page data is to be printed out. If no printing operation is to be carried out, the control process is advanced to a step S57. If the printing operation should be performed, the control process is advanced to a step S55.

In a step S55, both the reference supervision No. and page are entered by using of the keyboard 5-2, so that the 1-page data registered in the book D/B 21 is called up into the editing apparatus 3-2.

In a step S56, the 1-page data is printed out by the printer 7.

In a step S57, a judgement is made whether or not the next page is produced. When the next page is produced, the control process is returned to the step S28. Conversely if the next page is not produced, the control process is accomplished.

In accordance with above-mentioned process (first editing method), a new book is newly produced or edited.

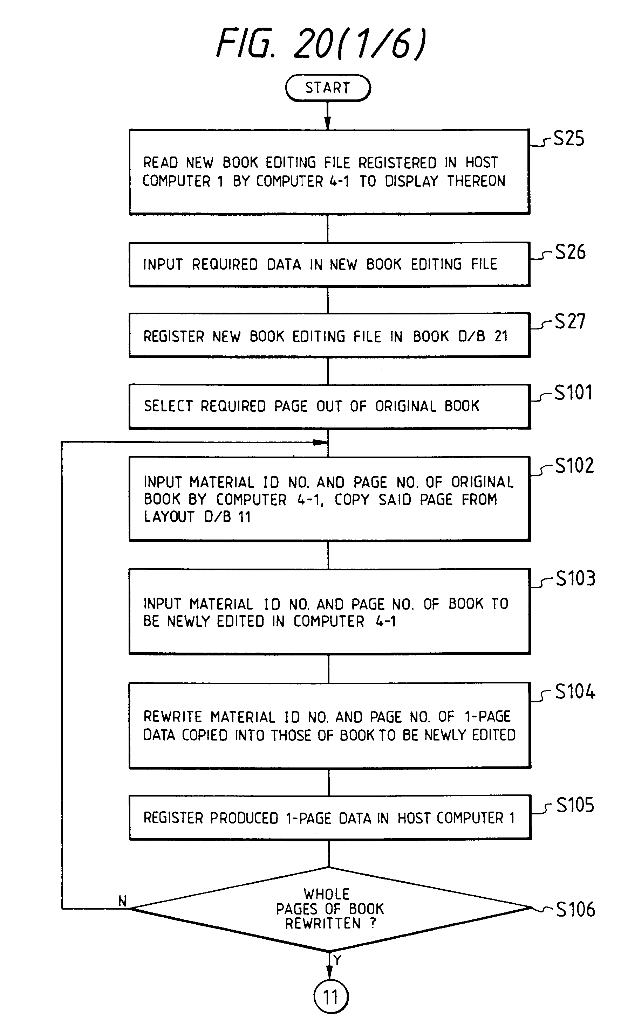

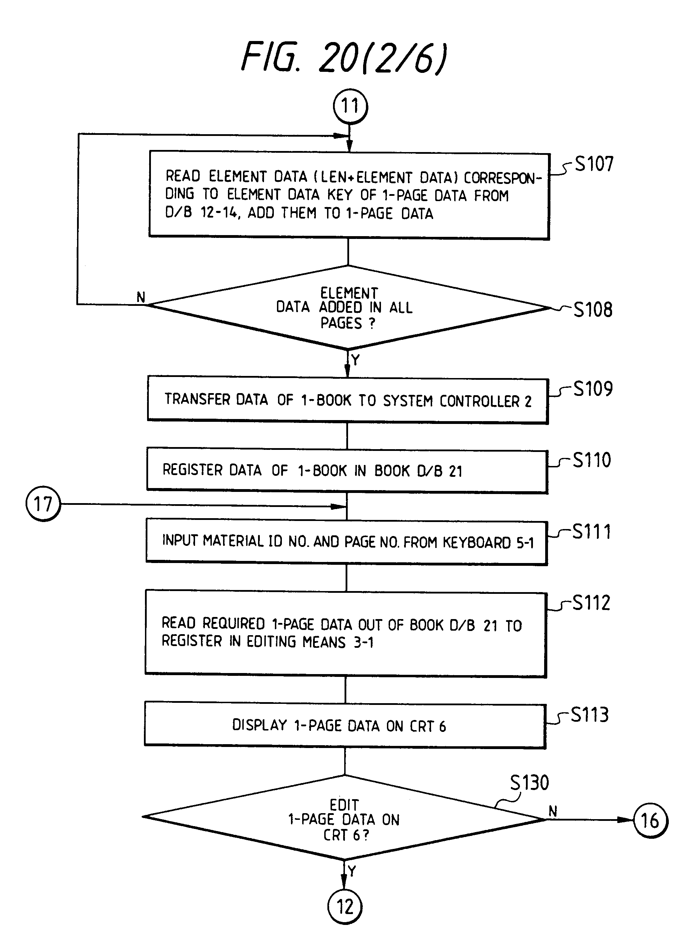

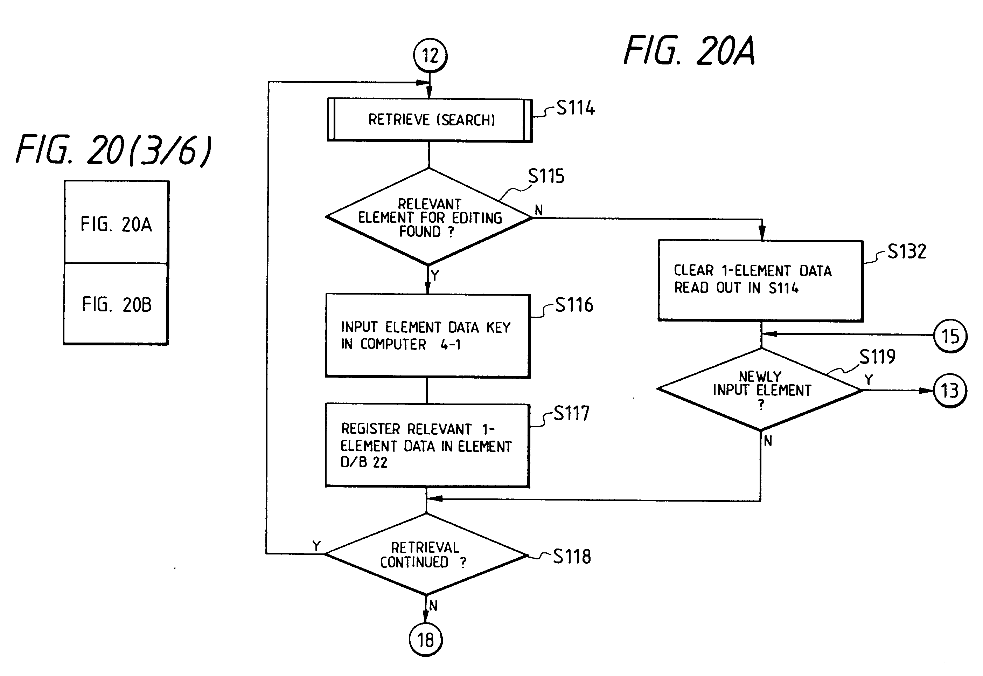

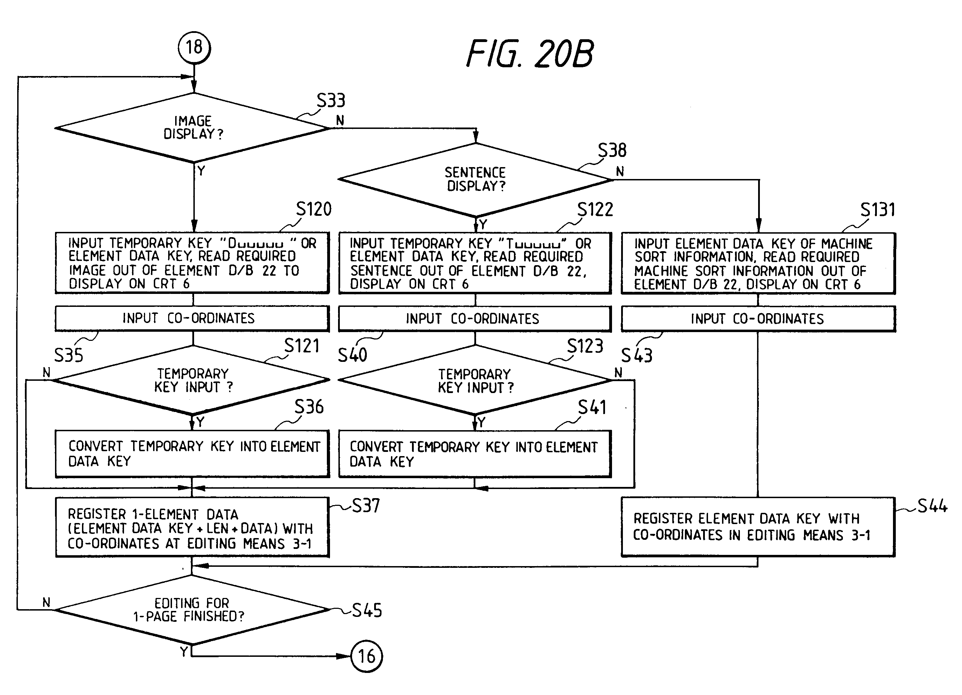

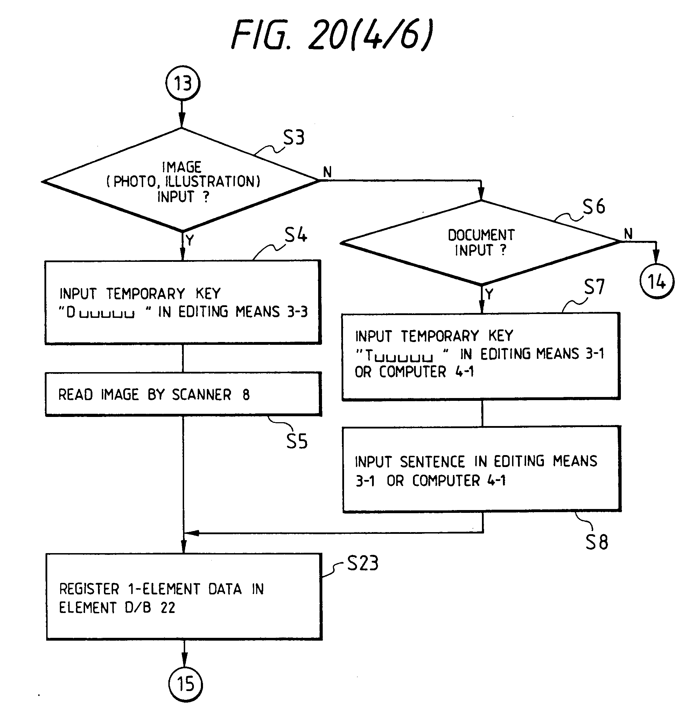

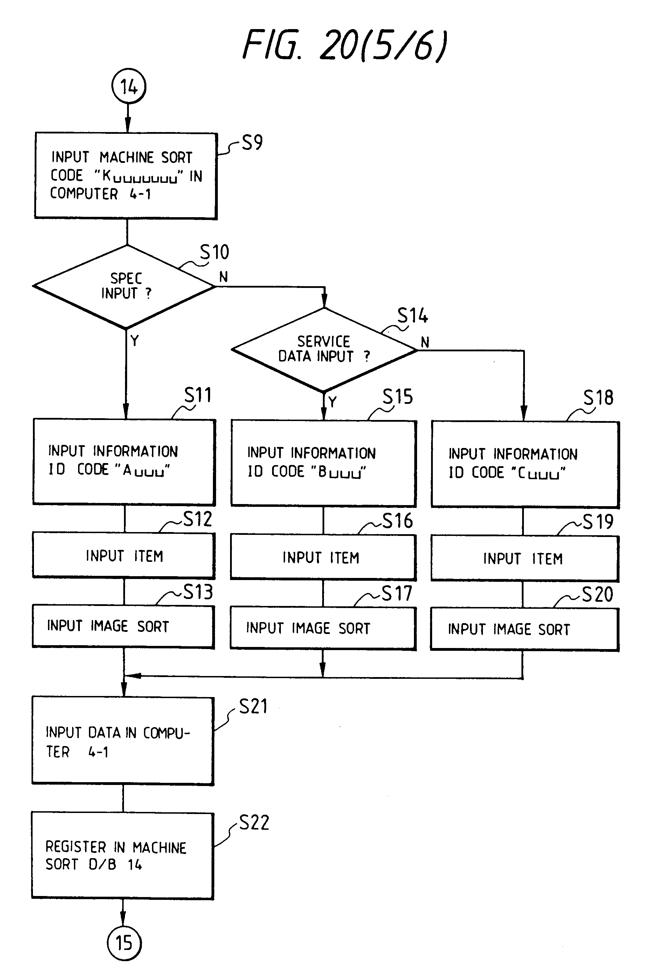

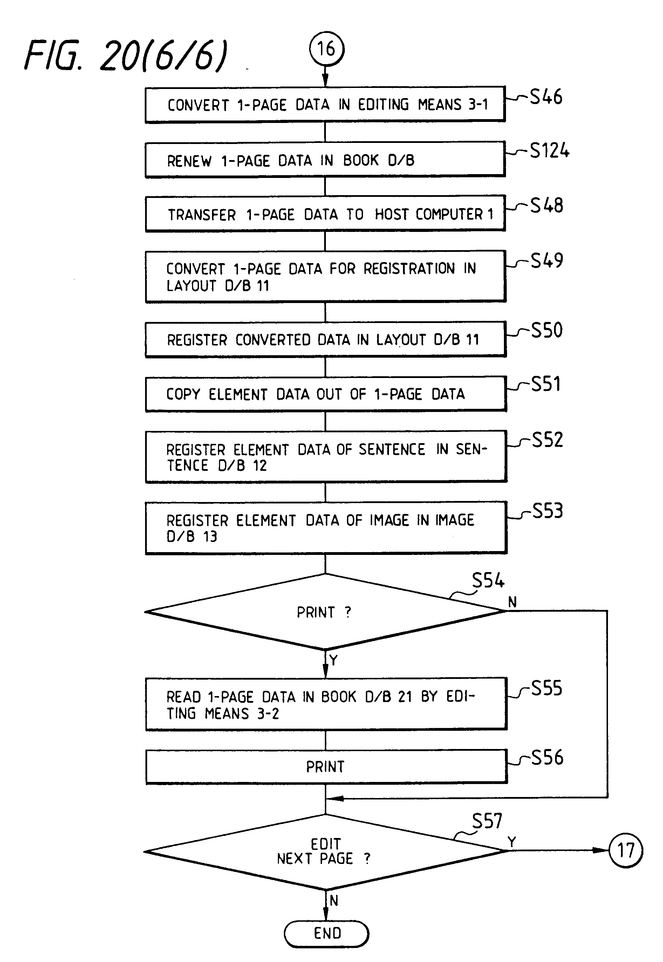

Referring now to Figs. 20 to 24, as is similar to the description on the first editing method, a description will be made of the second editing method applied to produce a service manual of a bike or the like.

Fig. 20 is a flowchart illustrating the second editing method according to a preferred embodiment of the invention.

In the respective steps shown in Fig. 20, the same reference numerals as those in Fig. 3 indicate the same or similar processing operations.

According to the second editing method, in a step S25, a new book producing file is first called up which has been registered in the host computer 1, by employing any one of the personal computers 4-1 to 4-N (for instance, the personal computer 4-1) connected to the host computer 1. Since the arrangement of this new book producing file is identical to that shown in Fig. 11, the description thereof is omitted.

After the new book producing file is called up, predetermined data, i.e., the material supervision No. information, staff-in-charge information and starting page information are entered into the new book producing file in a step S26.

Next, as illustrated in a step S27, the new book producing file is transferred by the host computer 1 to the system controller 2 and registered in the book D/B 21.

In a step S101, referring to a book which has been produced in the editing apparatus (referred to as "an original book"), a selection is made that the pages of this original book are utilized to produce a new book. That is to say, the following page selection is carried out, as one example. The 21st to 30th pages of the first original book are available to produce the 1st to 10th pages of the new book, the 46th to 50th pages of the second original book are utilized to produce the subsequent 11th to 15th pages of the new book, and furthermore, the 31st to 40th pages of the first original book are usable to produce the succeeding 16th to 25th pages thereof.

Such a process is performed while an operator actually observes the original books.

In a next step S102, the material supervision No. and the page number of the original book are input by way of the personal computer 4-1, and 1-page data (see Fig. 19) is copied in the host computer 1 from the layout D/B 11.

In a step S103, a new material supervision No. and a new page number of a book to be newly edited are input into the personal computer 4-1.

In a step S104, both the document supervision No. and the page number in the 1-page data copies in the previous step S102 are rewritten by the new material supervision No. and page number of the new book input in the previous step S103.

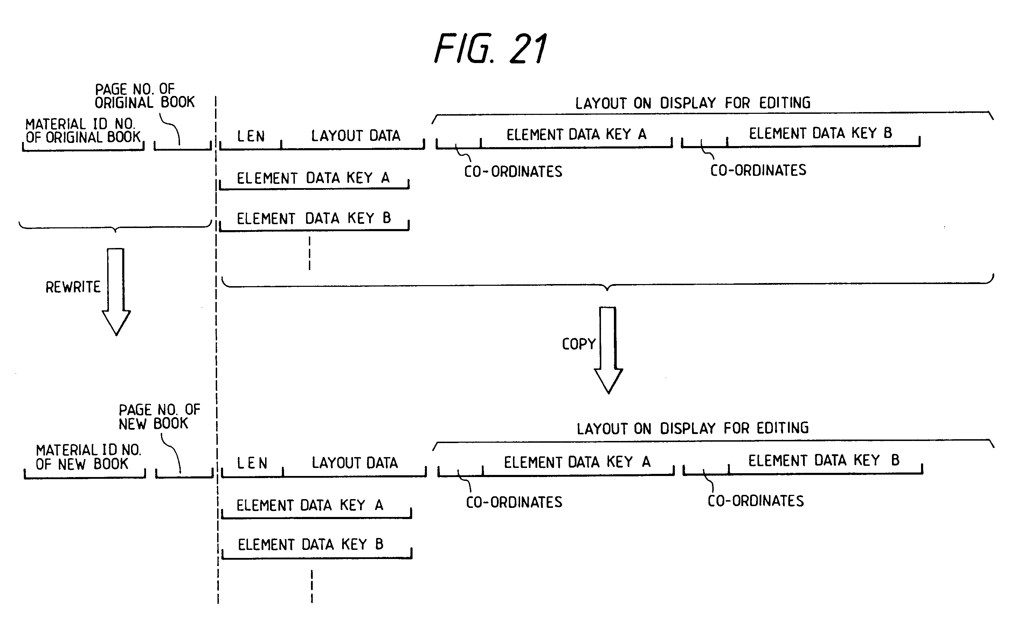

Fig. 21 illustrates the data rewriting operation executed in the step S104.

The 1-page data of the original book which has been called up and copied in the step S102 is as shown in the upper portion of Fig. 21. In the step S104, as illustrated in the lower portion of Fig. 21, only the material supervision No. and page number among the above-described data are rewritten by those of the new book.

In the step S105, the 1-page data produced in such a way is stored in the host computer 1.

In a step S106, a judgement is made whether or not the rewriting operation of the material supervision No. and the page number is accomplished for the new book. In accordance with the previous example, a judgement is made whether or not all of the 21st to 30th pages of the first original book, the 46th to 50th pages of the second original book, and the 31st to 40th pages of the first original book have been converted into the 1st to 25th pages of the new book.

If one book is not yet rewritten, the control process is returned to a step S102. To the contrary, if the rewriting operation is accomplished, the control process is advanced to a step S107.

In the step S107, the element data or both LEN of the element data and element data corresponding to the element data key, among the 1-page data converted in the step S104 are called up from the respective D/B 12 to 14. These data are added after the respective element data keys of the 1-page data which are arranged in the rear of the layout for the editing work. That is to say, the 1-page data converted in the stepS104 is rearranged in a complete form as shown in Fig. 18.

In a step S108, a judgement is made whether or not all pages of the new book have been rearranged in a complete form. If all pages of the new complete book are not yet rearranged, the control process is returned to step S107. If all pages are converted, the control process is advanced to a step S109.

In the step S109, the data of the new complete book is transferred from the host computer 1 to the system controller 2.

In a step S110, all pages of one complete book are registered in the book D/B 21 by the system controller 2.

The editing work can be executed even when the host computer 1 is not operated due to some reasons if all pages of one complete book are registered in the book D/B 21 connected to the system controller 2 as previously described.

In a subsequent step S111, the new material supervision No. and page number of the new book are entered by the keyboard 5-1 into the editing machine 3-1.

In a step S112, the input page data of the new book is read out from the book D/B 21 to be registered in the editing apparatus 3-1.

Then, in a next step S113, the page called up from the book D/B 21 is displayed on CRT 6.

In a step S130, a judgement is carried out whether or not the editing operation of the 1-page data displayed on CRT 6 is executed. That is to say, a judgement is made whether or not the pages which have been copied from the original books for the new book in the steps S102 to S104 can be merely utilized without any further edition. If no editing work is required, the control process is advanced to a step S46. If the editing work is required, the control process is advanced to a step S114.

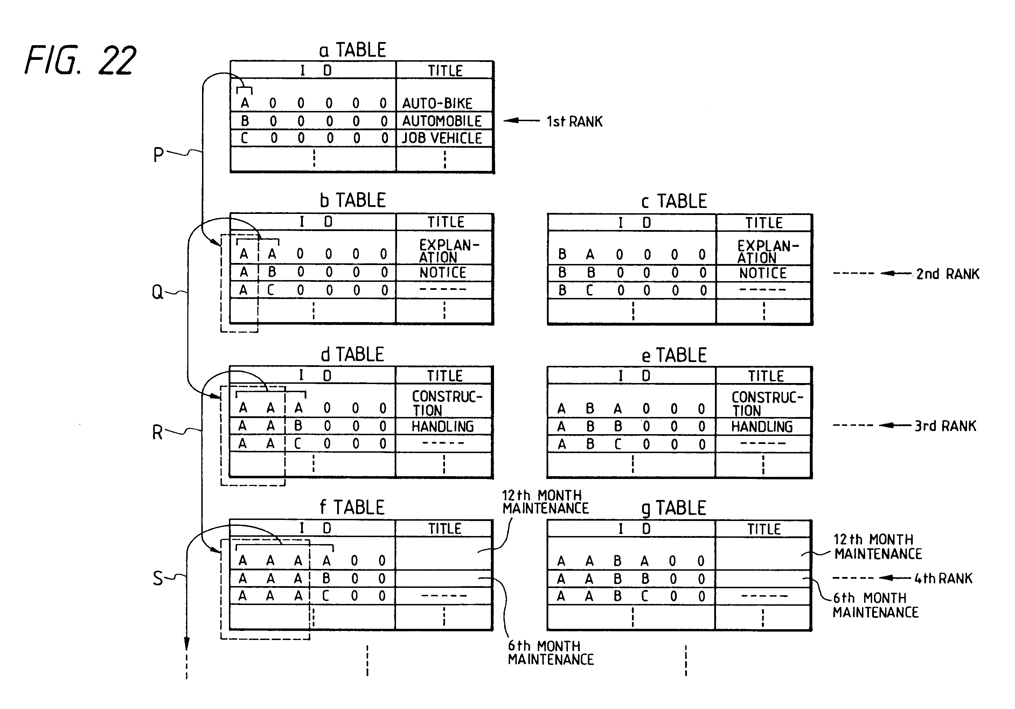

In the step S114, a retrieval operation by any one of the personal computers 4-1 to 4-N is performed whether or not the elements of the original book (including the original book selected in the previous step S101) can be utilized for editing the page of the new book displayed on CRT 6. The retrieval method will be discussed later with reference to Figs. 22 to 24.

In a step S115, a judgement is made whetheror not the element usable in the new book editing operation is found in the above-described retrieval operation.

If some relevant elements are found, the element data key of the retrieved relevant elements are input in the personal computer (for example, 4-1) in a step S116.

In a step S117, the 1-element data called up by the above retrieval operation is transferred to the system controller 2, and is registered in the element D/B 22 under the control of the system controller.

In a step S118, a judgement is made whether or not the retrieval operation is continued. If yes, then the control step is returned to the step S114.

If the element usable for editing the new book is not found in the step S115, the 1-element data retrieved in the step S144 is cleared in a step S132. It is, of course, not to clear the data stored in the D/B 12 to 14 at this stage.

In the step S119, a judgement is made whether or not the image data, document data or machine information data, namely element is newly input. If the element is not newly input, the control step is returned to the step S118.

When the element is newly input, the control process is advanced to the step S3. Since the processes effected in the steps S3 to S23 are same as those denoted by the same reference numerals in Fig. 3, the descriptions thereof are omitted.

If the control process defined by the step S22 or S23 is completed, the control step is returned to the step S119.

In the step S118, if the retrieval operation is not continued, another judgement is made whether or not the image is displayed on CRT 6 in the step S33. If the image is displayed, the temporary key or element data key of the image to be displayed is input by the keyboard 5-1 in the step S120, and the predetermined image is read out from the element D/B 22 and then displayed on CRT 6.

In the next step S35, the image is moved to the desired position and the coordinates thereof are input.

In the step S121, a judgement is judged whether or not the temporary key is input in the previous step S120.

When the temporary key is input, it is converted into the element data key in the step S36. The data conversion has been described with reference to Fig. 3, so that no further description is made here.

If a judgement is done that no temporary key was entered in the step S121, or after the process of the step S36 is accomplished, the element data key, LEN of the image data corresponding to the element data key and the image data itself are registered as one element data into the editing apparatus 3-1 together with the coordinates input in the previous step S35.

In the step S33, if a judgement is made that the image is not displayed, another judgement is done whether or not the document or sentence is displayed in the step S38.

When the document is displayed on CRT 6, the temporary key or element data key to be displayed is entered by the keyboard 5-1 in a step S122, and the predetermined document is called up from the element D/B 22 to be displayed on CRT 6.

In a subsequent step S40, the above document is moved to the desired position and the coordinates thereof are entered.

In a step S123, a judgement is made whether or not the temporary key was input in the previous step S122. When the temporary key is input, it is converted into the element data key in the step S41. This key conversion is carried out as same as in the conversion effected in the preceding step S36.

If a judgement is done that no temporary key was input in the step S123, or after the process effected in the step S41 is accomplished, the element data key, and both LEN and the sentence data of the document data corresponding to the element data key, are registered as one element data into the editing apparatus 3-1 together with the coordinates input in the preceding step S35.

If a judgement is made that no sentence was displayed in the preceding step S38, it is judged that the machine sort information is displayed, and the control process is advanced to a step S131.

In the step S131, the element data key of the machine sort information to be displayed is entered by the keyboard 5-1 and the predetermined machine sort information is called up from the element D/B 22 to be displayed on CRT 6.

In the next step S43, the above machine sort information is moved to the desired position and the coordinates thereof are input.

In a step S44, the element data key is registered together with the coordinates entered in the step S43 in the editing apparatus 3-1.

When the process in the step S37 or S44 is completed, a judgement is made whether or not the 1-page data displayed on CRT 6 has been edited. If not yet, the process is returned to the step S33. If completed, then the process is advanced to a step S46.

In a step S46, the edited one page data is converted in the form as illustrated in Fig. 18 in the editing apparatus 3-1.

In the next step S124, the converted one page data is updated in the book D/B 21.

Since the processes defined in the steps S48 through S57 are the same as those denoted by the same reference numerals of Fig. 3, the explanations thereof will be omitted. If in the step S57, the judgement is performed to edit the next page, the control process is returned to the step S111.

It is obvious that although in the explanations with reference to Fig. 20, the retrieval operation was previously executed before the 1-page data was edited in the steps S33 and thereafter, the necessary data were read out of the D/B 12 through 14 to be registered in D/B 22, these processes may be performed during the editing work.

A detailed description will now be made in that the process of the above-described step S114 is carried out for the document data retrieval operation. The retrieval operation of the step S114 is performed by employing any one of the personal computers 4-1 to 4-N.

Fig. 22 is a schematic diagram showing a portion of a table for the document data retrieval which has been previously set in the document D/B 12. A symbol "O" indicated in the respective tables of Fig. 22 represents "null", or that no data is entered.

In the document D/B 12, as illustrated in Fig. 22, a plurality of document data retrieval tables each consisting of an index (referred to as an "ID" simply) and a title have been input and set. A byte length of the ID is set to be equal to that of the detailed item code (6 bytes in the preferred embodiment) in order to correspond to the detailed item code of the element data key which in turn corresponds to the document or sentence data shown in Fig. 17

In an a-table of Fig. 22, the different data such as A, B, C, and so on, are respectively input only in the head byte (first byte) of ID each having a 6-byte length.

In a b-table of Fig. 22, the common data of "A" is input in the first byte of each ID, and the different data of "A, B, C" are respectively input in the second byte thereof.

In a c-table of Fig. 22, the common data of "B" is entered in the first byte of each ID and the different data of "A, B, C" are entered, respectively, in the second byte thereof.

In a d-table of Fig. 22, the common data of "AA" is input in the first and second bytes of each ID, and also the different data of "A, B, C" are entered, respectively in the third byte.

In an e-table of Fig. 22, the common data of "AB" is input in the first and second bytes of each ID, and the different data of "A, B, C" are entered, respectively, in the third byte thereof.

Similarly, in an f-table of Fig. 22, the common data of "AAA" is input in the first to third bytes of each ID, and the different data of "A, B, C" are entered, respectively, in the fourth byte thereof.

In a g-table of Fig. 22, the common data of "AAB" is input in the first to third bytes of each ID, and the different data of "A, B, C" are entered, respectively, in the fourth byte.

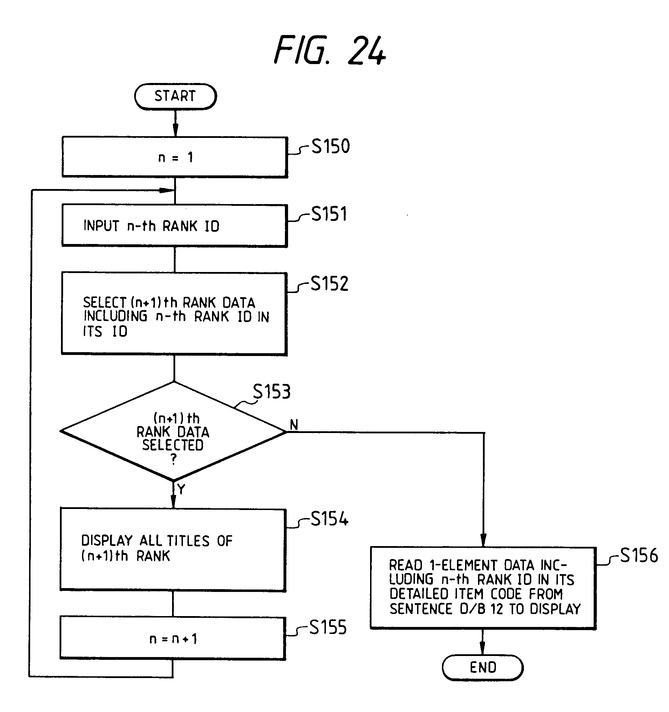

Thus, the respective tables for the document data retrieval operation set in the document D/B 12 are formed in a hierarchical structure as illustrated in Fig. 23.

In practice, each of the tables for the document data retrieval operation are formed in the following method. That is to say, in correspondence to the respective ID's in the table (a-table) of the first hierarchy or rank where the data has been input in only the first byte of each ID, each title (auto-bike, automobile, or special-purpose car etc.) representative of the first highest concept of the document data is input. Also, in correspondence to each of ID's in the tables (b and c-tables) of the second hierarchy or order where the data has been input in only the first and second bytes and eachID, another title (explanation, or notice etc.) representative of the second highest concept is input. Similarly, still other title (structure explanation, operating or handling manual etc.) representative of the third rank concept is input in the tables (d and e-tables) of the third hierarchy, and further title (twelfth month maintenance, or sixth month maintenance, etc.) indicative of the fourth rank concept is input in the tables (f and g-he tables) of the fourth hierarchy. Also the data same as the ID representative of the lowest concept is previously input in the detailed item code of the element data key shown in Fig. 17. And then the retrieval operation of the document data is performed as illustrated in Fig. 24.

It should be noted that the lowest hierarchy data need not be set in the table of the sixth hierarchy, but may be set in the table higher than the sixth hierarchy.

Fig. 24 is a flowchart for illustrating the retrieval method indicated in the step S114 according to one preferred embodiment of the invention. As previously described, the retrieval operation is carried out by any one of the personal computers 4-1 to 4-N.

In a step S150 of Fig. 24, first "n" is set to be 1.

In a step S151, ID of the n-th hierarchy or rank is input by, for instance, the personal computer 4-1.

In a step S152, the (n+1)th hierarchy data containing the n-th hierarchy ID in ID thereof is selected from the table for the document data retrieval operation.

In a step S153, a judgement is made whether or not the (n+1)th hierarchy data is present, namely, the (n+1)th hierarchy data is selected in the step S152.

If yes, then all titles of the (n+1)th hierarchy are displayed in the step S154. Then after 1 is added to "n" in a step S155, the control process is returned to the step S151.

When a judgement is made that the (n+1)th hierarchy data is not present in the step S153, the control process is transferred to the step S156.

In a step S156, the 1-element data containing the n-th hierarchy ID in the datailed item code thereof (i.e., 1-document or 1-sentence data shown in Fig. 17) is called up via the host computer 1 from the document or sentence D/B 12 and displayed in the personal computer 4-1.

Consequently, when the table for the document data retrieval operation is constructed as in Fig. 22, and "A" is input as ID only to the first byte, the b-table of the second hierarchy or rank where "A" is set in the first byte is selected and displayed, as indicated by an arrow "P".

Then, when "AA" is input in the first and second bytes as ID, the d-table of the third hierarchy where "AA" is set in the first and second bytes is displayed, as denoted by an arrow Q.

Similarly, when "AAA" is entered as ID in the first to third bytes, the f-table of the fourth hierarchy where "AAA" is set in the first to third bytes is displayed, as shown by an arrow R.

According to the above-mentioned method, such a retrieval operation can be done to show that such documents or sentences as a twelfth month maintenance manual are registered with respect to the document of the structure explanation on, for example, the auto-bike.

Furthermore, when "AAAA" is input as ID into the first to fourth bytes for the retrieval operation, the list of the fifth hierarchy (not shown) where "AAAA" is set in the first to fourth bytes is displayed as denoted by an arrow S.

When such a retrieval process is performed for the list of the lowest hierarchy, a judgement can be made whether or not therequired document data is registered in the document D/B 12.

When the necessary data is retrieved, the retrieved data can be utilized to edit a new book if the retrieved data is registered in the element D/B 22 as previously described with regards to the step S117.

Although the above explanation was made on the retrieval operation of the document data, the image data or machine sort information may be similarly retrieved. That is to say, if a plurality of retrieval tables as illustrated in Fig. 22, are set in the image D/B 13 and machine sort information D/B 14, and if ID's of the retrieval tables are input into the items (3-byte length; see Figs. 6 to 9) in the element data key of the image data and machine sort information, the above-described retrieval operation may be performed.

Although in the preceding description, the machine sort information and image were registered into the respective different D/B (i.e., the machine sort information D/B 14 and image D/B 13), they may be registered in a common D/B since the data of the machine sort information shown in Figs. 6 to 8 has the same format as that of the image data shown in Fig. 9.

Also when the image and document data were input in the previous embodiment, the temporary key was input first and converted into the element data key in the actual editing operation. However, the temporary key may not be input in advance but the element data key may be input at the beginning, which is similar to the entry of the machine sort information data.

In accordance with the preferred embodiment of the invention having the above-described arrangement, the host computer 1 which may be a large-scale general purpose computer illustrated in Fig. 2 enables the materials or elements to be supervised, and the system controller 2 which may be a medium-scale relay computer for connecting the host computer 1 and respective editing apparatuses 3-1 to 3-N, enables the data to be supervised in the page unit or book unit, so that a new book can be produced by utilizing a original book or elements of the original book had been produced by the editing apparatus. In consequence, new books can be efficiently produced.

In other words, when, for instance, a service manual, a shop manual, or the like are produced by the editing apparatus, and if a new manual of the machine similar to one described in the original book which has been already produced is produced, the manual relating to the similar machine can be produced within an extremely short time and in low cost since a major part of the original book can be utilized for editing the new manual.

Apparently, the editing apparatus according to this invention may be utilized not only to produce service manuals, shop manuals, but also general books, magazines and newspaper.

In the foregoing description, when the new book was produced by utilizing the information of the previously edited book, the layout informaiton read out from the layout D/B 11 was reconstructed into the 1-page data in the host computer 1. It is of course possible to perform such a process in the system controller 2. Similarly, under the control of the system controller 2, the 1-page data may be resolved into the information in the element unit and layout information.

It should be noted that when the element data of the machine information was input, in the previous description, the element data key was entered at the beginning without entry of the temporary key. According to the present invention, the temporary key may be first entered, which is similar to the element data relating to the document or sentence and image.

Although the personal computers 4-1 to 4-N were connected to the host computer 1 in the above description, the present invention is not limited to this example, for instance, it may be connected to the system controller 2.

Furthermore, the machine sort information data were input by the personal computers 4-1 to 4-N, in the previous explanation. These personal computers 4-1 to 4-N may be operated as word-processors, so that the document may be entered into either the host computer 1 or system controller 2.

A concrete construction of the present invention will now be described.

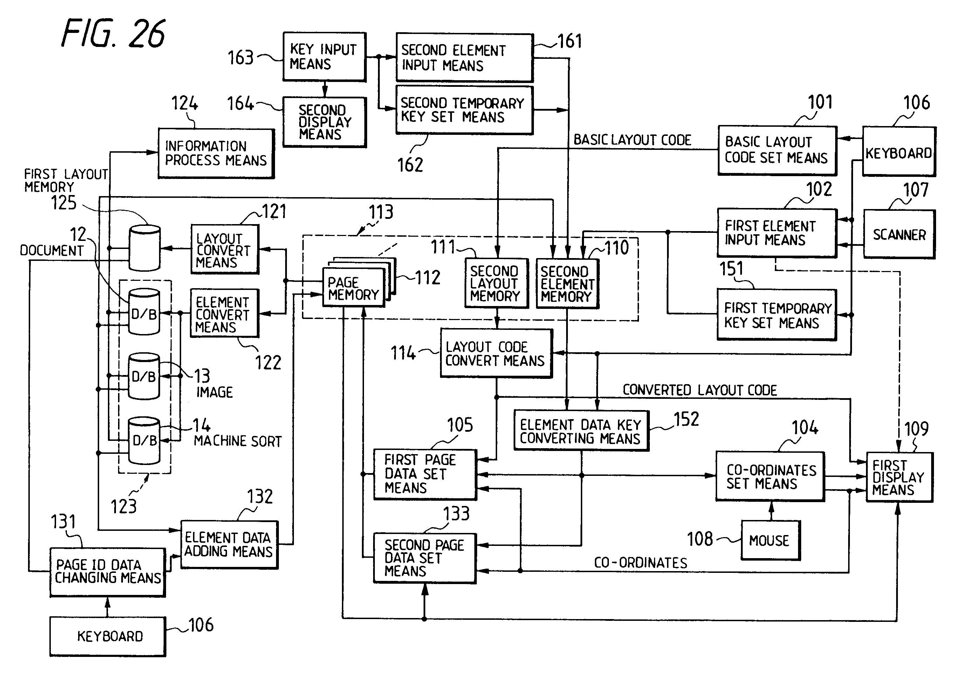

Fig. 26 is a functional block diagram for illustrating a construction of one preferred embodiment according to the present invention. In Fig. 26, the same reference numerals as those in Fig. 2 denote the same or similar parts.

In Fig. 26, a keyboard 106 has the equivalent function to the keyboard 5-1 to 5-N illustrated in Fig. 2, a key input means 163 has the equivalent function to the keyboards of the personal computers 4-1 to 4-N illustrated in Fig. 2, and a scanner 107 has the similar function to that of the scanner 8 illustrated in Fig. 2.

Similarly, a first display means 109 has the equivalent function to CRT 6 and 10 shown in Fig. 2, and a second display means 164 has the equivalent function to CRT of the personal computers 4-1 to 4-N.

Also, a second element memory means 110 has the equivalent function to the element D/B 22 shown in Fig. 2, a second layout memory means 111 has the equivalent function of the layout basic D/B 23 shown in Fig. 2, and a page memory means 112 has the equivalent function to the book D/B 21 of Fig. 2.

In Fig. 26, the keyboard 106 is connected to basic layout code setting means 101, first element inputting means 102, first temporary key setting means 151, layout code converting means 114, and element data key converting means 152.

Key entering means 163 is connected to second display means 164, second element inputting means 161 and second temporary key setting means 162.

The layout code setting means 101 set the basic layout code (see Fig. 4) entered in the step S1 of Fig. 3. The first temporary setting means 151 set the temporary key shown in Fig. 5.

As previously described with reference to Fig. 5, "D" is input into the head byte of the temporary key which is added to the image data, and "T" is input into the temporary key which is added to the document data. In the editing apparatuses 3-1 to 3-N, a judgement is made based upon the data of these head bytes that the data in question is the image data or document data, and the respective element data are handled in accordance with the sort of the data in question.

If the temporary key is of 6 bytes as illustrated in Fig. 5, identification data of the element data which is voluntarily decided by an operator himself is entered as the remaining 5 bytes other than the head bytes. In this case, numerical data is set, for example, in the lower 3 bytes and the numerical data may be automatically carried up after the element data is entered. That is, when the numeral data is set to "001", for example, at the beginning of the entry of the element data, the numericaldata may be carried up to "002", "003", ---, every time the element data is entered.

The first element inputting means 102 vector-convert the document or sentence data entered by the keyboard 106, or the image data and the like input by the scanner 107 to receive these data therein, whereas the second element inputting means 161 vector-convert the document data entered by the key inputting means 163, or the machine sort information data to receive these data therein.

The first and second temporary key setting means 151 and 162 set the temporary key shown in Fig. 5.

The layout code converting means 114 convert the layout code in the basic layout code entered through the basic layout code setting means 101 into the document supervision No. and pages.

The element data key converting means 152 convert the temporary key into the element data key as shown in Figs. 15 and 16. Said temporary key is entered through the first or second temporary key setting means 151 or 162, and stored in the second element memory means 110. The element data key converting means 152 may convert the temporary key into the element data key by directly inputting the element data key from the keyboard 106. Otherwise, during the data key conversion, the respective codes constituting the element data key may be displayed on the display device, and these codes may be sequentially selected in a so-called "dialogue" type processing operation with an operator. As to the image information, these codes are the machine sort code, information identification code and so on shown in Fig. 9.

The basic layout code setting means 101 is connected to the second layout memory means 111 in the memory means 113. The second layout memory means 111 is connected to the layout code converting means 114.

The first and second element inputting means 102 and 161 and the first and second temporary key setting means 151 and 162 are connected to the second element memory means 110 in the memory means 113. The second element memory means 110 is connected to the element data key converting means 152.

The element data key converting means 152 is connected to coordinates setting means 104, first page data setting means 105, and second page data setting means 133. The coordinates setting means 104 outputs to the first display means 109, the element data key output from the second element memory means 110 and the element data corresponding to said element data key, and also sets the positional coordinates of the element data moved by operating the mouse 108, and further outputs the coordinates information to the first display means 109, first page data setting means 105 and second page setting means 133.

The layout code converting means 114 call up an arbitrary basic layout code stored in the second layout memory means 111 to convert into the converted layout code as illustrated in the lower portion of Fig. 12, and then provide the converted layout code to the first page data setting means 105 and first display means 109.

The first page data setting means 105 is operated to produce a completely new book, and produce one page data, as illustrated in Fig. 18, by employing the element data key and element data output from the element data key converting means 152, the converted layout code output from the layout code converting means 114, and the coordinates information output from the coordinate setting means 104, and further output the one data ot the page memory means 112 in the memory means 113.

It should be noted that the element inputting means 102 is connected to the first display means 109 by a dot line, which indicates that when the document or the like is entered by the keyboard 106, the data of the document or the like is displayed on the first display means 109.

The page memory means 112 is connected to the layout converting means 121 and element converting means 122.

The layout converting means 121 eliminate LEN and element data from the element data group of the 1-page data (see Fig. 18) stored in the page memory means 112 to produce the layout information as illustrated in Fig. 19. The layout converting means 121 are connected to the first layout memory means 125 which is further connected to an information processing means 124. The first layout memory means 125 correspond to the layout D/B 11 in Fig. 2.

The element converting means 122 copies the element data group out of the 1-page data stored in the page memory means 112, and resolves the copied element data group into some element units. The element converting means 122 are connected to the first element memory means 123 which is further connected to the information processing means 124. The first element memory means 123 comprises the document D/B 12, image D/B 13, and machine sort information D/B 14.

The first layout memory means 125 is further connected to a page identification data changing means 131. When a new book is produced by utilizing the information of other book or books which have been previously edited by the editing apparatus and stored in the first layout memory means 125 and first element memory means 123, the page identification data changing means 131 reads the necessary layout information out of the layout information stored in the first layout memory means 125, and rewrites the material supervision No. and page number (namely, the page identification data for identifying the page of the layout information) of the layout information into the material supervision No. and page number of the book to be newly produced. The data entry for said rewriting operation is carried out by the keyboard 106.

The page identification data changing means 131 and first element memory means 123 are connected to the element data adding means 132. The element data adding means 132 reads out of the first element memory means 123, the element data of the layout information (see Fig. 19) output from the page identification data changing means 131, which corresponds to the respective element data keys set behind the layout for the editing work, and then adds said element data to the element data key.

The element data adding means 132 is connected to the page memory means 112.

The page memory means 112 is furthermore connected to the second page setting means 133 and first display means 109.

The second page data setting means 133 is operated to produce a new book which is similar to some book previously edited, and modify the one page information by employing the 1-page information output from the page memory means 112, the data in the element unit output from the element data key changing means 152, and the positional coordinates of the element data output from the coordinates setting means 104. Thereafter, the information of the modified 1-page information is output into the page memory means 112. The second page data setting means 133 directly return the 1-page information transferred from the page memory means 112 to the page memory means 112 when no data in the element unit is output from the element data changing means 152. The first element memory means 123 is furthermore connected to the second element memory means 110.

The basic layout code setting means 101, first element inputting means 102, first temporary key setting means 151, coordinates setting means 104, first page data setting means 105, second page data setting means 133, layout code converting means 114, and element data key converting means 152 are provided with the editing apparatuses 3-1 to 3-N or system controller 2, each shown in Fig. 2.

Also, the key inputting means 163, second display means 164, second element inputting means 161, and second temporary key setting means 162 are provided with the personal computers 4-1 to 4-N shown in Fig. 2.

Similarly, the layout converting means 121, element converting means 122, page identification data changing means 131, and element data adding means 132 are provided with the host computer 1 or system controller 2 shown in Fig. 2.

A description will now be made on the operation when a new book is produced in the editing apparatus having the above-described arrangement.

First, the information for disignating the 1-page basic layout is entered by the keyboard 106. This information is arranged into the basic layout code as shown in Fig. 4 in the basic layout code setting means 101. This basic layout code is stored in the second layout memory means 111. The entry and storing operation of the basic layout is performed plural times if required.

Then, the temporary key corresponding to the element data to be input is entered.

When the element data input subsequent to the element data key are the image data such as photographs, illustrations and so on, and the specific inputting means such as the scanner 107 or the like is required to enter these input data, the temporary key is input by the keyboard 106 (such as the keyboard 5-1 connected to the editing apparatus 3-1 shown in Fig. 2) .

When the element data are such data as characters, symbols and document which can be input by key operation the temporary key is entered from the keyboard 106 or key inputting means 163 (any of the personal computers 4-1 to 4-N in Fig. 2).

The data of the temporary key other than the head byte thereof is a code arbitrarily determined by an operator himself so as to identify the element data to be input by the operator of the editing apparatus. And said data is not to supervise the element data within the first element memory means 123 or second element memory means 110. The temporary key is set in a form as illustrated in Fig. 5 in the first temporary key setting means 151 or second temporary setting means 162.

In case that the temporary key is entered by the key board 106, then the document or machine sort information is entered by the keyboard 106, and the image is read by the scanner 107, and these data are output to the first element inputting means 102.

In case that the temporary key is input by the key inputting means 163, thereafter the document or machine sort information is entered by the key inputting means 163, and these data are output via the second element inputting means 161.

In the first or second element inputting means 102 or 161, LEN of the element data is added to the element data, if required. This data is output together with the temporary key to the second element memory means 110 and stored therein. A plurality of entry and storing operations for the temporary key and element data are carried out, if required.

With the above-described operation, such editing data as document and machine sort information comprising of characters and symbols are entered by the key inputting means 163.

When the entry of various element data is accomplished, the editing or arranging operation of the element data is commenced by the editing apparatus shown in Fig. 2.

At first, the necessary layout code among the basic layout code stored in the second layout memory means 111, namely the basic layout code by which the layout data of the page to be edited is set is read out from the second layout memory means 111 by inputting the layout code from the keyboard 106, and output to the layout code converting means 114.

In the layout code converting means 114, the layout code among the basic layout code is converted into the material supervision No. and page input by the keyboard 106. That is, the converted layout code (shown in the lower ode portion of Fig. 12) is produced. The converted layout code is output to the first page data setting means 105 and first display means 109, and as illustrated in Fig. 13, the basic layout corresponding to the converted layout code is displayed on the first display means 109.

When an operator inputs the temporary key corresponding to the element data to be displayed on the basic layout by means of the keyboard 106, the element data having the element data key is output to the element data key converting means 152 from the second element memory means 110. In the element data key converting means 152, as previously described, the temporary key is converted to the element data key.

The element data key, and the element data or LEN and the element data output from the element data key converting means 152 are supplied to the first page data setting means 105 and coordinates setting means 104. The coordinates setting means 104 outputs the element data to the first display means 109.

When the element data displayed on the first display means 109 is moved by the mouse 108, the positional coordinates corresponding to the moved position thereof is set by the coordinate setting means 104, and the set coordinates are transferred to the first page data setting means 105.

A plurality of element data are displayed on a predetermined position of the basic layout, if required so as to perform the page editing work.

When the one page editing work has been accomplished, in response to the output signals from the layout code converting means 114, element data key converting means 152 and coordinates setting means 104, the first page data setting means 105 produce the one page data as illustrated in Fig. 18. As stated in detail, the one page data is constructed of the converted layout code output from the layout code converting means 114, layout for the editing work consisting of the positional coordinates output from the coordinate setting means 104 and also the element data key of the element data corresponding to the positional coordinate, and the element data group consiting of the element data key which constitutes the layout for the editing work and the element data corresponding to said element data key.

The 1-page data produced in the first page data setting means 105 is stored in the page memory means 112. The amount of the edited 1-page data stored in the page memory means 112 is equal to the necessary pages so as to constitute the book to be edited. These page data are forwarded to a hard copy producing apparatus (not shown).

The 1-page data stored in the page memory means 112 is transferred to the layout converting means 121 where the layout information as represented in Fig. 19 is produced from the 1-page data. The layout information is transferred to the first layout memory means 125 and stored therein.

The 1-page data stored in the page memory means 112 is also transferred to the element converting means 122. In the element converting means 122, the element data group is copied from the 1-page data, the copied element data group is resolved into 1-element units, and thereafter transferred to the first element memory means 123. The document (or sentence) element data among the resolved element data group is stored in the sentence D/B 12 in the first element memory means 123, the image element data in the image D/B 13, and the machine sort information element is in the machine sort information D/B 14.

A new book can be produced in accordance with the above-described method, and the data of the edited new book is resolved to the layout data and the element data, and then respectively stored.

It should be notified that the element data such as document and images stored in the above-mentioned D/B's may be called up therefrom so as to merely observe said element data for a certain purpose other than the editing work.

When the element data key is input which corresponds to the element data wanted to be observed, by the keyboard 106 or key input means 163, the element data requested is displayed on the first display means 109 if said key input performed through the keyboard 106, and on the second display means 164 if said key input performed through the key input means 163.

A description will now be made on a case in that by utilizing a book previously edited, a new book similar to said already edited book is produced.

After an operator judges which pages of the edited book are available to edit the new book while actually observing the edited book, the reference supervision No. and page (or page identification data) of the edited book are entered to read out from the first layout memory means 125 the 1-page data which is available for the new book. The readout data is transferred to the page identification data changing means 131.

When the reference supervision No. and page of the book to be produced are entered by the keyboard 106 or other key inputting means 163 (not shown) connected to the page identification data changing means 131, the reference supervision No. and page of the readout data are changed into the entered reference supervision No. and page in the page identification data changing means 131.

The element data adding means 132 reads out from the first element memory means 123, the element data of the changed 1-page data which corresponds to the element data key set after the layout for the editing work, and adds said element data to the end of the element data key. With this operation, one page data can be established.

After the complete 1-page data is stored in the page memory means 112, it is transferred to the first display means 109 to be displayed on it, and also transferred to the second page data setting means 133.

An operator will judge whether or not the one page data is required to be change while observing said one page data displayed on the first display means 109. If a judgement is negative, the resultant information is output from suitable means (not shown), the one page data is transferred to the page memory means 112, and furthermore said data is resolved into the element data and layout data in the layout converting means 121 and element converting means 122, respectively. In this case, since the element data has been already stored in the first element memory means 123, only the layout data is output to the first layout memory means 125 to be stored in it.

When some particular element data among the 1-page data displayed on the first display means 109 is to be deleted or changed into other element data, or when the 1-page data displayed on the first display means 109 should be edited, the element data key corresponding to said particular element data is entered, so that the element information, i.e., element data key and element data are read out from the first element memory means 123 to be registered into the second element memory means 110. The readout operation of the element information may be performed by either the keyboard 106 or key inputting means 163.

If the necessary element data is not stored in the first element memory means 123, the temporary key and element data are newly entered to be registered in the second element memory means 110.

That is to say, the second element memory means 110 stores the element information consisting of the temporary key and element data, and the element information consisting of the element data key and element data.

The second element memory means 110 is energized by appropriate means (not shown) and outputs the necessary element data and element data kay, or the element data and temporary key to the element data key converting means 152. When the element data and temporary key are called up, the element data key converting means 152 converts the temporary key into the element data key entered by the keyboard 106, and outputs them. On the other hand, when the element data and element data key are called up, the element data key converting means 152 output the element data key without any conversion.

The element data key and element data output from the element data key converting means 152 are transferred to the coordinates setting means 104 and second page data setting means 133. The coordinate setting means 104 output the element data to the first display means 109, set the positional coordinates of the element data which are determined by the mouse, to supply them to the second page data setting means 133.

When the changes (or editing work) of the 1-page data displayed on the first display means 109 are accomplished by repeating the above mentioned operation if required, the second page data setting means 133 rearrange the 1-page data transferred from the page memory means 112 as the edited 1-page data. Precisely speaking, the second page data setting means 133 erases the element data, element data key and the positional coordinates thereof among the 1-page data transferred from the page memory means 112. Said element data has been overlapped by the element data newly set on the layout during the editing work, and the element data key correspons to the element data. Also, the second page data setting means 133 adds the element data newly set on the layout during the editing work, the element data key corresponding to said element data and the positional coordinates of said element data.

Thus, the edited or changed 1-page data is output from the second page data setting means 133 to the page memory means 112 to be stored therein. Then, the 1-page data is output to the layout converting means 121 and element converting means 122 in the page unit or book unit. Both the layout converting means 121 and element converting means 122 resolves the output data into the element and layout data, outputs the resolved data to the respective first layout memory means 125 and first element memory means 123 to be store therein. In this case, the data on the element which have been previously stored in the first element memory means 123 are not doubly stored therein.

Under the above-described operation, when producing the new book resemble to a previously edited book, the common element data can be commonly used without any modifing and revising, so that time required to produce a new book can be greately shortened.

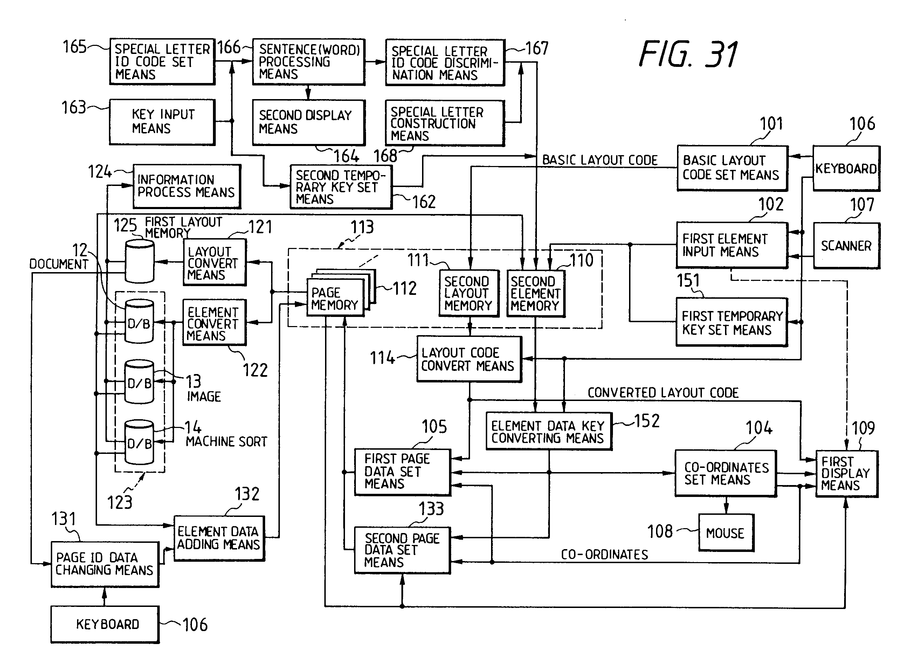

Fig. 31 is a block diagram of still other preferred embodiment of the invention. The same reference numerals in Fig. 31 denote the same or similar circuit elements in Fig. 26.

In Fig. 31, a specific character (or letter) judgement code setting means 165 outputs a specific character identification code when a symbol entered by the key inputting means 163 corresponds to such a specific character or letter which cannot be entered directly by the keyboard, e.g., "Umlaut(¨)".

A document producing (or processing) means 166 produces a document by employing the data entered by the key inputting means 163, and the specific character identification code output from the specific character identification code setting means 165, and output the resultant document as document data. The document producing means 166 is provided with the second element inputting means 161 shown in Fig. 26 and means having a function for editing (movement, copying or the like) the input document. In other words, the second personal computers 4-1 to 4-N in the embodiment (of Fig. 31) function as wordprocessors.

A specific character identification code judging means 167 judges whether or not the document data output from the document producing means 166 contains the specific character identification code. If yes, then the judging means 167 transfers a symbol output subsequent to the specific character identification code and a character or letter output subsequent to the symbol to a specific character converting means 168. If the judgment is negative, the symbol or character of the document data is directly output to a second element memory means 110.

The specific character converting means 168 constitute a predetermined specific character or letter code based on the symbol and character output subsequent to said symbol which are derived from the specific character identification code judging means 167, and output the specific character code to the second element memory means 110.

The second temporary key setting means 162, key inputting means 163, second display means 164, specific character identification code setting means 165, and document producing means 166 are equipped within the personal computers 4-1 to 4-N shown in Fig. 2.

The specific character identification code judging means 167 and specific character converting means 168 are provided within the personal computers 4-1 to 4-N, host computer 1, or system controller 2 shown in Fig. 2.

A description will now be made on an operation to produce documents or sentences, for instance, in French by the work stations (that is, personal computers 4-1 to 4-N) in the editing apparatus having the above-described construction according to this invention, and to store the produced documents as the document data.

In general, the work stations connected to the host computer have a function as a wordprocessor. Then, an operator produces the document by the wordprocessor function. However, according to the ordinary wordprocessor function, these work stations can only enter the usual alphabets, numerals and basic symbols. Even if French "é" is tried to be entered, this character cannot be directly entered through the ordinary keyboard, because such a key for a French character "é" is not provided in the keyboard.

According to the editing apparatus of this invention, the specific character identification code is first output from the specific character code setting means 165 instead of the entry of the specific character "é", and thereafter, a symbol indicative of "´" and an alphabet "e" are continuously entered from the key inputting means 163.

When, for instance, French "température" is entered by the key inputting means 163, an operator first enters the characters of "temp" by the keyboard connected to the key inputting means 163. However, the specific character "é" to be input subsequently cannot be directly entered from the keyboard without modifying this character.

Accordingly, the specific character identification code is output by the specific character identification code setting means 165, thereafter both the symbol "´" and the character "e" are continuously input by the key inputting means, and then, the remaining characters "rature" are entered, so that the entry of said French word is accomplished.

In the document producing means 166, the document is produced based on the specific character identification code entered by the specific character identification code setting means 165, and the symbol as well as characters input by the key inputting means 163, and output to the second display means 164. At the same time, this document is output as the document data to the specific character identification code judging means 167. In this case, the data format of the above-described French "température" output from the document producing means 166 is "temp#´erature". It should be noted that "#" represents the specific character identification code.

It should be noted that even if the specific character identification code is input, this specific character identification code itself is not displayed on the second display means 164, but alternatively, the symbol and character entered subsequent to this specific character identification code are displayed which are different colors, or different brightness. Accordingly, they can be discriminated from the remaining characters.

In the specific character identification code judging means 167, a judgement is made whether or not the document data output from the document producing means 166 contains the specific character identification code, namely "#". If not, then this document data is directly output to the second element memory means 110 without any modification.

When the specific character identification code is in the output document data, the symbol entered subsequent to the specific character identification code and the character input subsequent to the symbol are supplied to the specific character converting means 168. In this example, both the symbol " " and character "e" are output to the specific character converting means 168.

In the specific character converting means 168, the predetermined specific character of "e" is composed of the symbol " " and character "e", and output to the second element memory means.

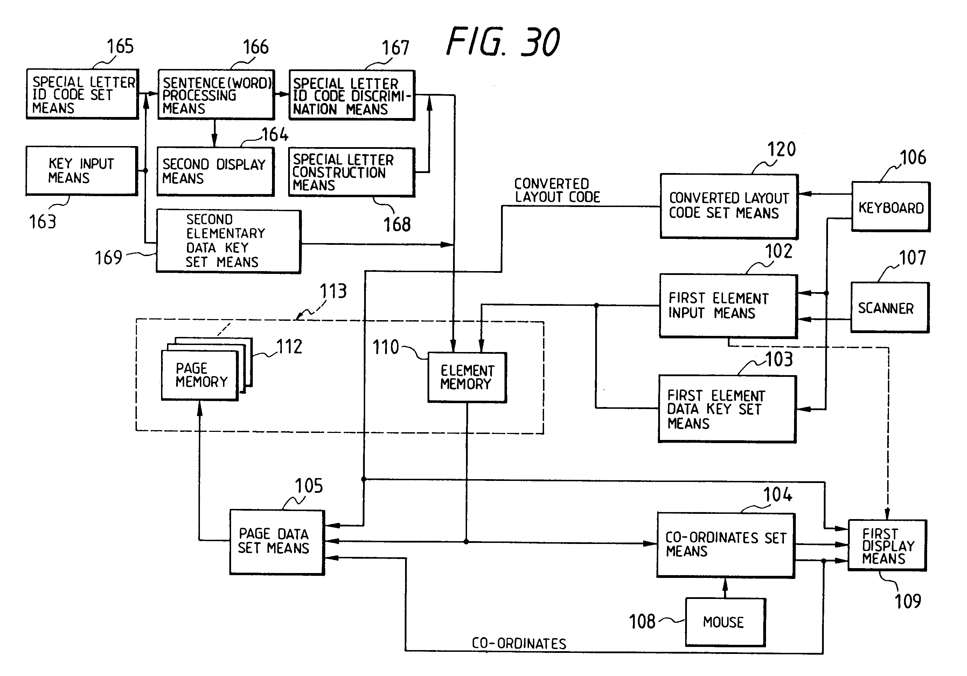

As apparent from the foregoing descriptions, in the editing apparatus according to the preferred embodiment in Fig. 30, the specific characters which cannot be entered by simply operating the conventional work station as the wordprocessor, but may be entered only by way of the small-scale computer, can be input even by the work station according to the present invention, which accordingly results in a wide spread in usage of the work station.

As a consequence, there is no need to employ a large quantity of expensive small-scale computers requiring complex operations and the editing work can be efficiently performed.

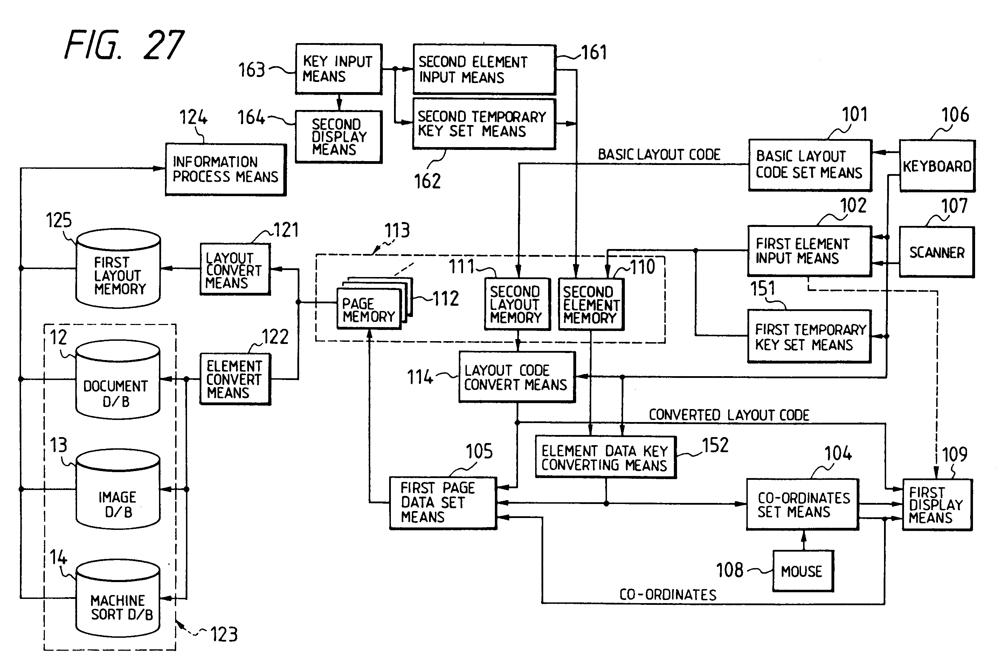

Fig. 27 is a block diagram according to still further preferred embodiment of this invention. The same reference numerals in Fig. 27, denote the same or similar circuit components shown in Fig. 26.

As is apparent from the comparison between Figs. 26 and 27, the page identification data changing means 131, element data adding means 132 and second page data setting means 133 shown in Fig. 26 have been omitted in the preferred embodiment of Fig. 27.

In the present embodiment, although a new book cannot be produced by employing the information (layout data and element data) of a previously edited book, the new book can be edited by using the element data unless the element data used for the editing work of the previously edited book is erased from the second element memory means 110.

As is similar to the preferred embodiment shown in Fig. 26, the element data of the produced book is utilized in the information processing means 124 for performing a certain process other than the editing process.

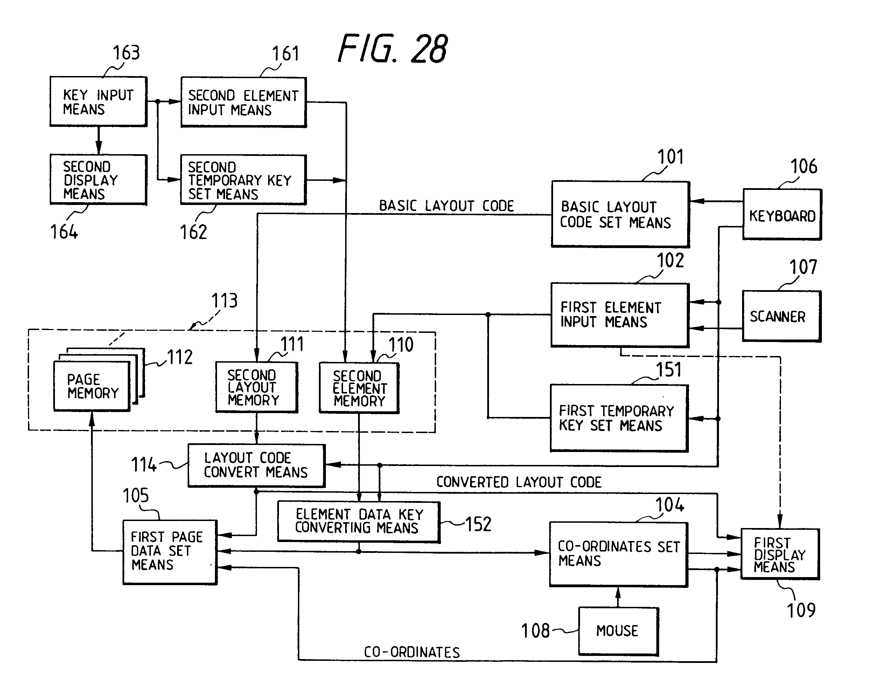

Fig. 28 is a functional block diagram according to a still further embodiment of the invention. The same referecne numerals shown in Fig. 28 denote the same or similar circuit components shown in Fig. 27.

As is obvious from the comparison between Figs. 27 and 28, the layout converting measn 121, element converting means 122, first element memory means 123 and first layout memory means 125 have been omitted in the preferred embodiment of Fig. 28.

In the preferred embodiment, since the data of the previously edited book cannot be stored after being resolved into the element information and layout information, the element information cannot be utilized in the information processing means other than the editing apparatus (the information processing means 124 shown in Fig. 27). However, unless the data relating to the edited element is erased in the second element memory means 110, the common element data can be commonly utilized in case that the book similar to the edited book is produced, in the similar manner to the editing apparatus shown in Fig. 27.

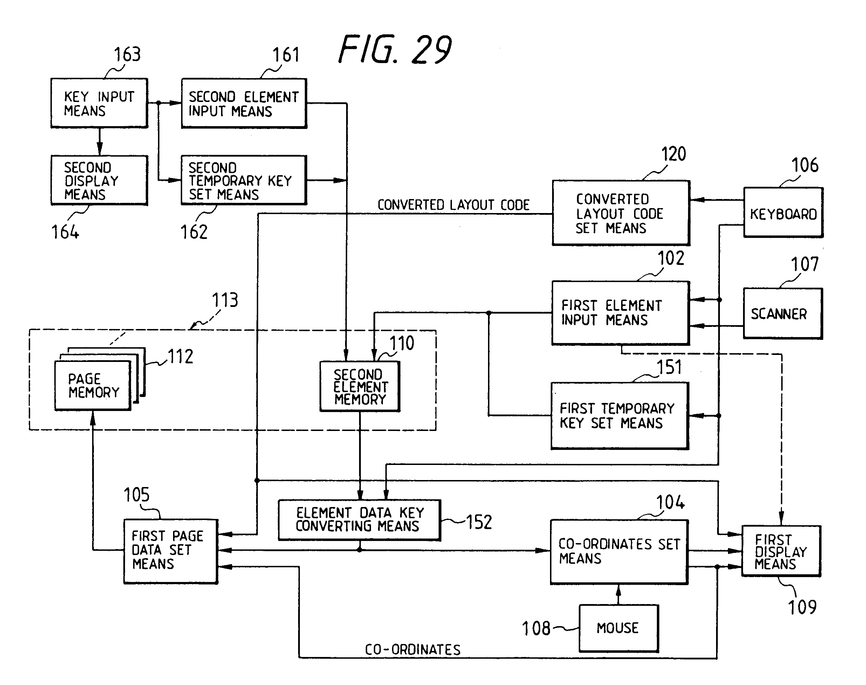

Fig. 29 is a functional block diagram of a modification of the embodiment shown in Fig. 28. In Fig. 29, the converted layout code setting means 120 directly set the converted layout code by the keyboard 106.

According to this preferred embodiment since the layout code should be set every time each page is edited, this embodiment is not preferably applied to edit a book having a large number of pages. However, the simpler circuit arrangement can be achieved as compared with the preferred embodiments shown in Figs. 26, 27 and 28.

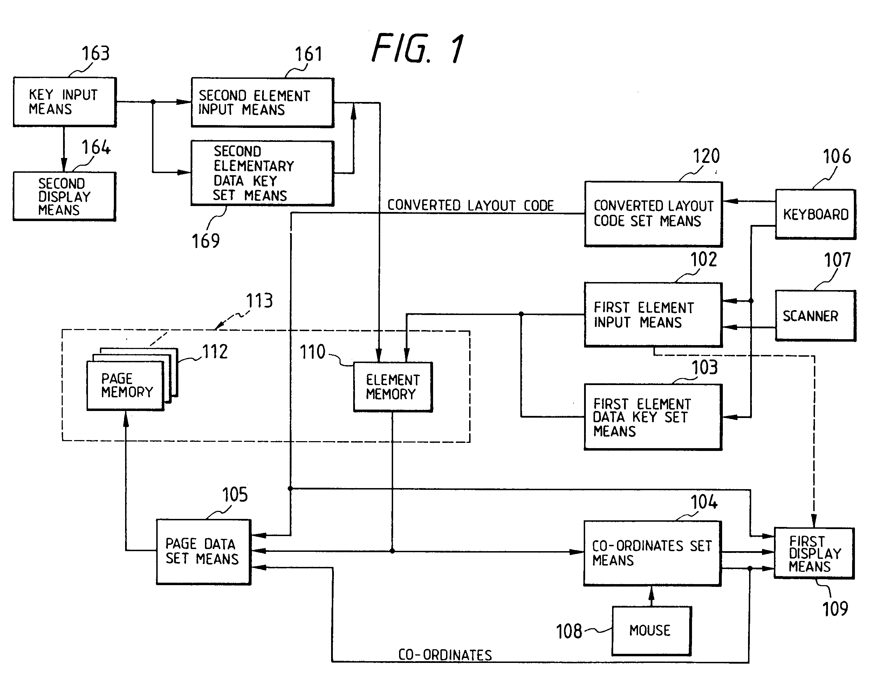

Fig. 1 is a functional block diagram showing the basic construction of the invention as a further modification of the embodiment shown in Fig. 29. The same reference numerals shown in Fig. 1 indicate the same or similar circuit elements of Fig. 29.

In this preferred embodiment, since the element data key must be set every time the element data is entered, this embodiment is not preferable to edit a book requiring a lot of element data. However, the much simpler construction can be realized as compared with the embodiments shown in Figs. 26, 27, 28 and 29.

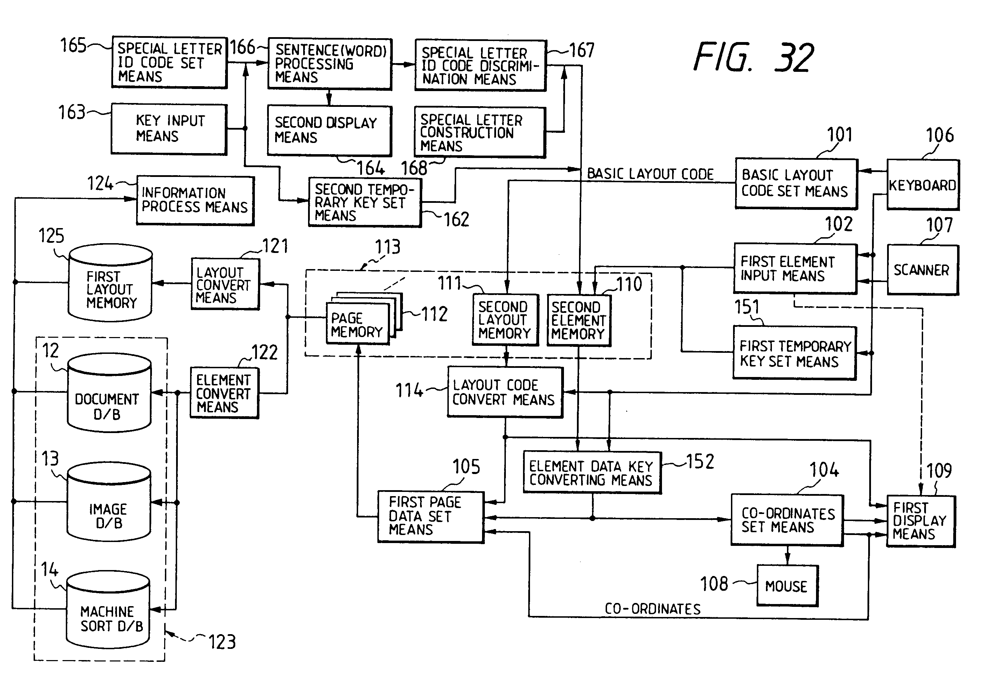

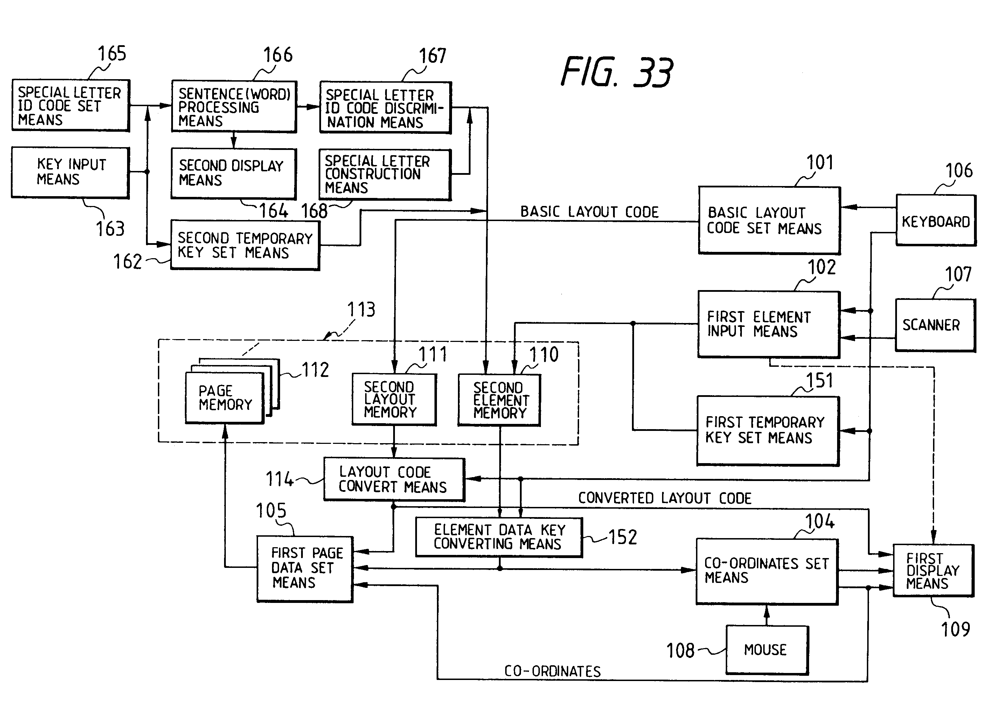

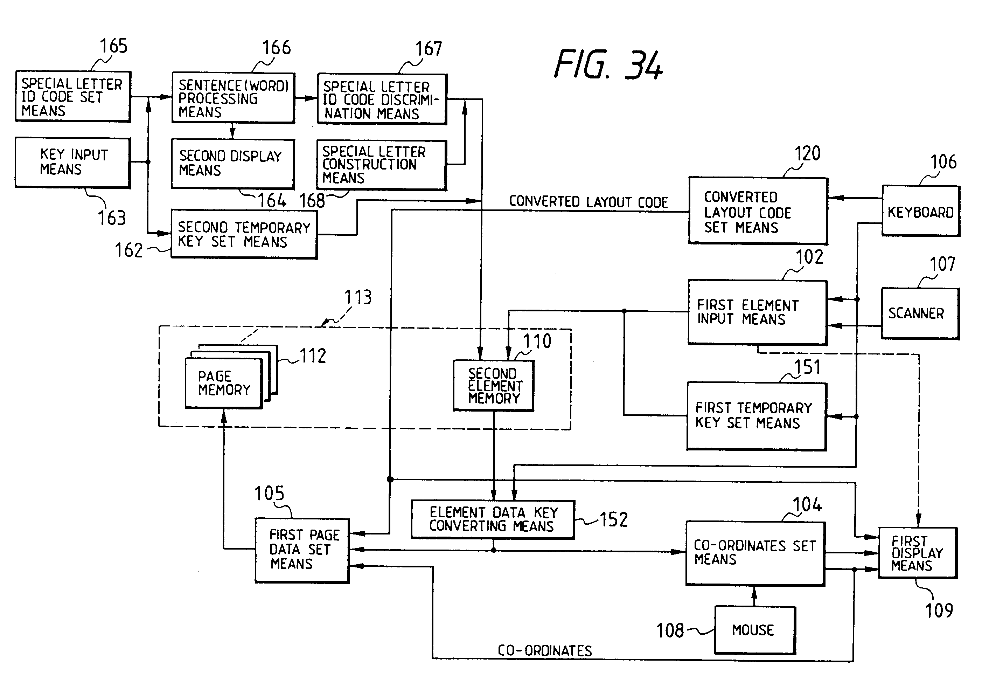

Figs. 30, 32, 33 and 34 are functional block diagrams of still further preferred embodiments according to this invention, respectively, in which the specific character or letter can be entered, and the second element inputting means 161 shown in Figs. 1, 27, 28 and 29 have been substituted by the specific character identification code setting means 165, document producing means 166, specific character identification code judging means 167 and specific character converting means 168.

### Industrial Applicability

As is apparent from the foregoing descriptions, in accordance with the present invention, not only the simple editing data (machine sort information) consisting of numbers and symbols, but also the document data can be produced by the work stations (personal computers, wordprocessors etc.) to be directly entered without any modifications.

In consequence, since the small-scale computer may be utilized only when the entry of such complex data as the images or photographs and illustrations which requires the specific input devices, or the editing work utilizing said complex image data is performed, there is no need to equip a large number of small-scale computers, so that the editing apparatus can be manufactured in low cost.

Moreover, the entry of such simple data as document and machine sort information which is effected only by the keyboard operation, can be performed by the simply operable work stations without employing the complex-operated small-scalecomputer. As a result, time required to enter the data can be shortened and thus the higher efficient editing work can be achieved.

In addition, according to this invention, the specific document written in the specific characters other than the usual alphabets, e.g., French and German document can be readily handled, so that the wide application of the wordprocessor can be expected, which emphasizes the particular advantages of the invention.

## Claims

1. A document editing device comprising a host computer (1) to which a data base (123,125) is connected, high computer capacity editing means (2,3), connected to the host computer (1) and a low computer capacity workstation (4) connected to one of said host computer and said editing means,
said editing means (2,3) comprising high computer capacity input means (102) for inputting first document content data including images and text data for each page in the form of first element data, said first element data including in particular, text, an illustration or a photograph, and first setting means (103) for specifying a first unique identifier corresponding to each element data,
characterized by
said workstation including low computer capacity input means (161) for inputting second document content data including only text data for each page in the form of second element data, and second setting means (169) for specifying a second unique identifier corresponding to each second element data, and
said editing means further including means (120) for specifying a layout data for editing which designates a basic layout of a page of said document to be edited and includes material ID number and layout data; means (104) for setting positional coordinates of each of said first and/or second element data on the basic layout; page data composing means (105) for composing a document content data for one page by combining the first or second element data, the identifiers corresponding thereto and the positional coordinates thereof on the basic layout data for editing; and means (122) for separating said element data and the identifiers thereof out of the document content data of the composed one page and storing them in the data base.

2. A document editing device as claimed in claim 1, wherein the means (120) for specifying the layout data for editing includes:
means (101) for defining a basic layout code having a layout data portion and a layout identifier portion;
memory means (111) for storing and selectively reading out said basic layout code; and
means (114) for converting the layout identifier portion of said basic layout data, which is read out of said memory means (111) during an editing operation, into the material ID number and a page number of a document to be edited.

3. A document editing device as claimed in claim 2, comprising further second memory means (110) for temporarily storing said first and second document content data and the identifiers corresponding to the first and second element data.

4. A document editing device as claimed in claim 3, wherein at least one of the first and second setting means (103;169) comprises means (151;162) for specifying a temporary identifier for the corresponding element data which is newly input and means (152) for converting the temporary identifier into the relevant element data identifier, the document content data input by at least one of the first and second input means (103;169) and said temporary identifier being temporarily stored in said second memory means (110).

## Patentansprüche

1. Dokument-Editiervorrichtung mit einem Grundcomputer (1), mit dem eine Datenbasis (123, 125) verbunden ist, einer Computerhochkapazität-Editiereinrichtung (2, 3), verbunden mit dem Grundcomputer (1), und einer Computerniedrigkapazität-Arbeitsstation (4) verbunden mit einem von dem Grundcomputer und von der Editiereinrichtung,
wobei die Editiereinrichtung (2, 3) eine Computerhochkapazität-Eingabeeinrichtung (102) umfaßt zum Eingeben erster Dokumentsinhaltsdaten einschließlich Bildern und Textdaten für jede Seite in Form von ersten Elementdaten, wobei die ersten Elementdaten insbesondere Text, eine Illustration oder eine Fotographie enthalten, und eine erste Einstelleinrichtung (103) zum Spezifizieren eines ersten einzigartigen Identifizierers entsprechend jeder Elementdaten,
dadurch **gekennzeichnet,** daß
die Arbeitsstation eine Computerniedrigkapazität-Eingabeeinrichtung (161) umfaßt zum Eingeben zweiter Dokumentinhaltsdaten einschließlich nur Textdaten für jede Seite in Form von zweiten Elementdaten, und eine zweite Einstelleinrichtung (169) zum Spezifizieren eines zweiten einzigartigen Identifizierers, entsprechend jeder zweiter Elementdaten, und
die Editiereinrichtung weiterhin eine Einrichtung (120) zum Spezifizieren von Layout-Daten zum Editieren umfaßt, welche ein grundlegendes Layout einer Seite des Dokuments das zu editieren ist, bezeichnen, und eine Material-ID-Nummer und Layout-Daten enthalten; eine Einrichtung (104) zum Einstellen von Positionskoordinaten von den ersten und/oder zweiten Elementdaten an dem grundlegenden Layout; eine Seitendaten-Zusammenstelleinrichtung (105) zum Zusammenstellen von Dokumentinhaltsdaten für eine Seite durch Kombinieren der ersten oder zweiten Elementdaten, der dem entsprechenden Identifizierer und den Positionskoordinaten davon auf den grundlegenden Layout-Daten zum Editieren; und eine Einrichtung (122) zum Separieren der Elementdaten und der Identifizierer davon aus den Dokumentinhaltsdaten der zusammengesetzten einen Seite und Speichern davon in der Datenbasis.

2. Dokument-Editiervorrichtung nach Anspruch 1, dadurch **gekennzeichnet,** daß die Einrichtung (120) zum Spezifizieren der Layoutdaten zum Editieren umfaßt:
eine Einrichtung (101) zum Definieren eines grundlegenden Layout-Codes mit einem Layout-Datenabschnitt und einem Layout-Identifiziererabschnitt;
eine Speichereinrichtung (111) zum Speichern und selektiven Auslesen des grundlegenden Layout-Codes; und
eine Einrichtung (114) zum Umwandeln des Layout-Identifiziererabschnitts der grundlegenden Layout-Daten, welcher ausgelesen wird von der Speichereinrichtung (111) während eines Editierbetriebs, in die Material-ID-Nummer und eine Seitennummer eines zu editierenden Dokuments.

3. Dokument-Editiervorrichtung nach Anspruch 2, **gekennzeichnet** durch eine zweite Speichereinrichtung (110) zum temporären Speichern der ersten und zweiten Dokumentinhaltsdaten und der Identifizierer entsprechend den ersten und zweiten Elementdaten.

4. Dokument-Editiervorrichtung nach Anspruch 3, dadurch **gekennzeichnet,** daß zumindest eine der ersten und zweiten Einstelleinrichtungen (103; 169) eine Einrichtung (151; 152) umfaßt zum Spezifizieren eines temporären Identifizierers für die entsprechenden Elementdaten, welche neu eingegeben werden, und eine Einrichtung (152) zum Umwandeln des temporären Identifzierers in den relevanten Elementdaten-Identifizierer, wobei die Dokumentinhaltsdaten eingegeben werden durch zumindest eine der ersten und zweiten Einrichtungen (103; 169) und der temporäre Identifizierer temporär gespeichert wird in der zweiten Speichereinrichtung (110).

## Revendications

1. Dispositif d'édition de document comprenant un ordinateur hôte (1) auquel une base de données (123, 125) est connectée, un moyen d'édition à capacité d'ordinateur élevée (2, 3) connecté à l'ordinateur hôte (1) et un poste de travail à capacité d'ordinateur faible (4) connecté à soit ledit ordinateur hôte soit ledit moyen d'édition ;
ledit moyen d'édition (2, 3) comprenant un moyen d'entrée à capacité d'ordinateur élevée (102) pour entrer des premières données de contenu de document incluant des données d'image et des données de texte pour chaque page sous la forme de premières données élémentaires, lesdites premières données élémentaires incluant en particulier un texte, une illustration ou une photographie, et un premier moyen d'établissement (103) pour spécifier un premier identifieur unique correspondant à chacune des données élémentaires,
caractérisé en ce que :
ledit poste de travail inclut un moyen d'entrée à capacité d'ordinateur faible (161) pour entrer des secondes données de contenu de document incluant seulement des données de texte pour chaque page sous la forme de secondes données élémentaires et un second moyen d'établissement (169) pour spécifier un second identifieur unique correspondant à chacune des secondes données élémentaires ; et
ledit moyen d'édition inclut en outre un moyen (120) pour spécifier des données de présentation pour l'édition qui désignent une présentation de base d'une page dudit document qui doit être édité et qui incluent un numéro d'identification d'ouvrage et des données de présentation ; un moyen (104) pour établir des coordonnées de position de chacune desdites premières et/ou secondes données élémentaires sur la présentation de base ; un moyen de composition de données de page (105) pour composer des données de contenu de document pour une seule page en combinant les premières ou secondes données élémentaires, les identifieurs leur correspondant et les coordonnées de position de celles-ci sur les données de présentation de base pour l'édition ; et un moyen (122) pour faire en sorte que lesdites données élémentaires et ses identifieurs soient séparés des données de contenu de document de l'une seule page composée et pour les stocker dans la base de données.

2. Dispositif d'édition de document selon la revendication 1, dans lequel le moyen (120) pour spécifier les données de présentation pour l'édition inclut :
un moyen (101) pour définir un code de présentation de base comportant une partie de données de présentation et une partie d'identifieur de présentation ;
un moyen de mémoire (111) pour stocker et lire sélectivement ledit code de présentation de base ; et
un moyen (114) pour convertir la partie d'identifieur de présentation desdites données de présentation de base, lesquelles sont lues dans ledit moyen de mémoire (111) pendant une opération d'édition, en le numéro d'identification d'ouvrage et en un numéro de page d'un document qui doit être édité.

3. Dispositif d'édition de document selon la revendication 2, comprenant en outre un second moyen de mémoire (110) pour stocker temporairement lesdites premières et secondes données de contenu de document et les identifieurs correspondant aux premières et secondes données élémentaires.

4. Dispositif d'édition de document selon la revendication 3, dans lequel au moins l'un des premier et second moyens d'établissement (103 ; 169) comprend un moyen (151 ; 162) pour spécifier un identifieur temporaire pour les données élémentaires correspondantes qui sont nouvellement entrées et un moyen (152) pour convertir l'identifieur temporaire en l'identifieur de données élémentaires concerné, les données de contenu de document entrées par au moins l'un desdits premier et second moyens d'entrée (103 ; 169) et ledit identifieur temporaire étant temporairement stockés dans ledit second moyen de mémoire (110).
